# EUROPEAN PATENT APPLICATION

(11) **EP 4 615 123 A1**
(43) Date of publication of application: **10.09.2025**
(21) Application number: 23884825.3
(22) Date of filing: 30.10.2023
(51) Int. Cl.: H04W 72/231

(54) **TIME DOMAIN CONFIGURATION INFORMATION INDICATION METHOD AND APPARATUS, AND TERMINAL AND NETWORK-SIDE DEVICE**

(30) Priority: 04.11.2022 CN 202211379573
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN)
(74) Representative: Studio Torta S.p.A.
(86) International application number: PCT/CN2023/127652
(87) International publication number: WO 2024/093894

(57) **Abstract**

This application provides a method and a device for indicating time domain configuration information, a terminal, and a network-side device. The method includes: detecting, by a terminal, time domain configuration information sent by a network-side device; and determining, by the terminal, transmission configuration of a time unit according to the time domain configuration information upon detecting the time domain configuration information, wherein the transmission configuration comprises at least one of the following: the time unit is configured with an uplink sub-band; the time unit is configured with a downlink sub-band; a transmission direction of the time unit.

## Description

### CROSS-REFERENCE TO RELATED APPLICATIONS

This application claims priority to Chinese Patent Application No. 202211379573.0, filed on November 4, 2022, in China, entitled "Method, Apparatus, Terminal, and Network-Side Device for Indicating Time Domain Configuration Information," the entirety of which is incorporated herein by reference.

### TECHNICAL FIELD

The present disclosure relates to the field of communication technologies, and in particular to a method, an apparatus, a terminal, and a network-side device for indicating time domain configuration information.

### BACKGROUND

To address issues related to uplink transmission coverage, latency, and capacity in Time Division Duplex (TDD) mode, the research direction of nonoverlapping sub-band full duplex has attracted increasing attention. In this approach, frequency domain resources are divided into multiple sub-bands that do not overlap with each other, and uplink and downlink frequency domain resources are respectively located in different sub-bands. This approach is referred to as full duplex.

### SUMMARY

An objective of the present disclosure is to provide a method, an apparatus, a terminal, and a network-side device for indicating time domain configuration information, so as to solve the problem in related technologies where a transmission direction of a terminal cannot be changed at a certain moment.

An embodiment of the present disclosure provides a method for indicating time domain configuration information, which is applied to a terminal, and includes:
detecting time domain configuration information transmitted by a network-side device;
in response to detecting the time domain configuration information, determining a transmission configuration of a time unit according to the time domain configuration information;
wherein the transmission configuration includes at least one of the following:
   the time unit is configured with an uplink sub-band;
   the time unit is configured with a downlink sub-band;
   a transmission direction of the time unit.

In some embodiments, the time domain configuration information is carried in predetermined Downlink Control Information (DCI).

Wherein the predetermined DCI includes at least one of the following:
a dedicated DCI format corresponding to the time domain configuration information;
DCI format 2-0.

In some embodiments, the time domain configuration information is used to indicate that a transmission direction of the time unit is a first transmission direction;
the first transmission direction is opposite to a second transmission direction of the time unit indicated by target information; or, the first transmission direction is the same as the second transmission direction of the time unit indicated by the target information.

In some embodiments, the time domain configuration information is used to indicate that the time unit is configured with an uplink sub-band or to indicate that the time unit is configured with a downlink sub-band;
wherein, if the target information indicates that the transmission direction of the time unit is uplink, the time domain configuration information indicates that the time unit is configured with a downlink sub-band;
if the target information indicates that the transmission direction of the time unit is downlink, the time domain configuration information indicates that the time unit is configured with an uplink sub-band.

In some embodiments, the time domain configuration information is indicated by at least one of the following manners:
a predefined value;
   or,
a predefined symbol.

In some embodiments, in a case that the time domain configuration information is indicated by a predefined value, determining the transmission configuration of the time unit according to the time domain configuration information includes at least one of the following:
if a value corresponding to a first time unit is a first value, a transmission direction of the first time unit is determined according to the target information;
if a value corresponding to the first time unit is a second value, then: determining that the first time unit is configured with a first sub-band; or, determining that the first time unit is configured with the first sub-band and that the transmission direction of the first time unit is opposite to a transmission direction indicated by the target information; or, determining the transmission configuration of the first time unit according to configuration information of sub-band full duplex;
wherein the first sub-band is an uplink sub-band or a downlink sub-band.

In some embodiments, determining the transmission configuration of the first time unit according to the configuration information of sub-band full duplex includes at least one of the following:
if the configuration information of sub-band full duplex indicates that a transmission direction of the first time unit is uplink, the transmission direction of the first time unit is determined to be uplink;
if the configuration information of sub-band full duplex indicates that a transmission direction of the first time unit is downlink, the transmission direction of the first time unit is determined to be downlink;
if the configuration information of sub-band full duplex indicates that the first time unit is configured with a second sub-band, the first time unit is determined to be configured with the second sub-band, where the second sub-band is an uplink sub-band or a downlink sub-band.

In some embodiments, in a case that the time domain configuration information is indicated by a predefined symbol, determining the transmission configuration of the time unit according to the time domain configuration information includes at least one of the following:
if the predefined symbol corresponding to a second time unit indicates uplink, the transmission direction of the second time unit is determined to be uplink;
if the predefined symbol corresponding to the second time unit indicates downlink, the transmission direction of the second time unit is determined to be downlink;
if the predefined symbol corresponding to the second time unit indicates flexible, the transmission direction of the second time unit is determined to be flexible;
if the predefined symbol corresponding to the second time unit is a first symbol, then: determining that the second time unit is configured with a third sub-band; or, determining that the second time unit is configured with the third sub-band and the transmission direction of the second time unit is opposite to a transmission direction indicated by the target information, where the third sub-band is an uplink sub-band or a downlink sub-band; or, determining the transmission configuration of the second time unit according to configuration information of sub-band full duplex;
wherein the first symbol is different from the symbol indicating uplink, the symbol indicating downlink, and the symbol indicating flexible.

In some embodiments, determining the transmission configuration of the second time unit according to the configuration information of sub-band full duplex includes at least one of the following:
if the configuration information of sub-band full duplex indicates that a transmission direction of the second time unit is uplink, the transmission direction of the second time unit is determined to be uplink;
if the configuration information of sub-band full duplex indicates that a transmission direction of the second time unit is downlink, the transmission direction of the second time unit is determined to be downlink;
if the configuration information of sub-band full duplex indicates that the second time unit is configured with a fourth sub-band, the second time unit is determined to be configured with the fourth sub-band, where the fourth sub-band is an uplink sub-band or a downlink sub-band.

In some embodiments, the time domain configuration information indicates a transmission configuration of time units within one of the following time domain ranges:
all slots;
a time domain range indicated by Radio Resource Control (RRC);
a predefined time domain range;
a time domain range corresponding to a flexible sub-band.

In some embodiments, the method further includes:
receiving valid time information of the time domain configuration information transmitted by the network-side device;
determining the transmission configuration of the time unit according to the time domain configuration information includes:
determining the transmission configuration of the time unit within the valid time according to the time domain configuration information.

In some embodiments, the method further includes:
performing a first processing in a case that the terminal receives slot format indication (SFI)-related information configured by the network-side device via RRC signaling but does not detect the time domain configuration information;
wherein the first processing includes one of the following:
not performing data transmission and data reception within the valid time of the time domain configuration information;
determining the transmission direction of the time unit according to target information;
determining the transmission direction of the time unit according to first time domain configuration information, where the first time domain configuration information is the most recently received time domain configuration information before the current one;
assuming a default transmission direction of the time unit within the valid time to be a third transmission direction, where the third transmission direction is uplink transmission or downlink reception;
determining whether to perform data transmission or data reception according to indication information.

In some embodiments, determining whether to perform data transmission or data reception according to the indication information includes at least one of the following:
if the indication information indicates a third value, data reception is stopped in a third time unit, where the third time unit is a time unit indicated as downlink reception by the target information, or the third time unit is a time unit indicated as downlink reception by both the target information and the first time domain configuration information;
if the indication information indicates a fourth value, data transmission is stopped in a fourth time unit, where the fourth time unit is a time unit indicated as uplink transmission by the target information, or the fourth time unit is a time unit indicated as uplink transmission by both the target information and the first time domain configuration information.

In some embodiments, the target information includes part or all of the following information:
uplink and downlink common configuration information;
uplink and downlink dedicated configuration information;
SFI in DCI format 2-0.

An embodiment of the present disclosure provides a method for indicating time domain configuration information, which is applied to a network-side device, and includes:
transmitting time domain configuration information to a terminal, where the time domain configuration information is used to indicate a transmission configuration of a time unit;
wherein the transmission configuration includes at least one of the following:
   the time unit is configured with an uplink sub-band;
   the time unit is configured with a downlink sub-band;
   a transmission direction of the time unit.

In some embodiments, the time domain configuration information is carried in a predetermined DCI;
wherein the predetermined DCI includes at least one of the following:
a dedicated DCI format corresponding to the time domain configuration information;
DCI format 2-0.

In some embodiments, the time domain configuration information is used to indicate that a transmission direction of a time unit is a first transmission direction;
the first transmission direction is opposite to a second transmission direction of the time unit indicated by target information; or, the first transmission direction is the same as the second transmission direction of the time unit indicated by the target information.

In some embodiments, the time domain configuration information is used to indicate that the time unit is configured with an uplink sub-band or to indicate that the time unit is configured with a downlink sub-band.
if the target information indicates that the transmission direction of the time unit is uplink, the time domain configuration information indicates that the time unit is configured with a downlink sub-band;
if the target information indicates that the transmission direction of the time unit is downlink, the time domain configuration information indicates that the time unit is configured with an uplink sub-band.

In some embodiments, the time domain configuration information is indicated by at least one of the following manners:
a predefined value indication;
   or,
a predefined symbol.

In some embodiments, in a case that the time domain configuration information is indicated by a predefined value, a manner in which the time domain configuration information indicates the transmission configuration of the time unit includes at least one of the following:
if a value corresponding to a first time unit is a first value, the transmission direction of the first time unit is indicated to be determined according to the target information;
if a value corresponding to the first time unit is a second value, then: indicating that the first time unit is configured with a first sub-band; or, indicating that the first time unit is configured with the first sub-band and the transmission direction of the first time unit is opposite to the transmission direction indicated by the target information; or, indicating that the transmission configuration of the first time unit is determined according to configuration information of sub-band full duplex;
wherein the first sub-band is an uplink sub-band or a downlink sub-band.

In some embodiments, in a case that the time domain configuration information of the time unit is indicated by a predefined symbol, a manner in which the time domain configuration information indicates the transmission configuration of the time unit includes at least one of the following:
if the predefined symbol corresponding to a second time unit indicates uplink, the transmission direction of the second time unit is indicated to be uplink;
if the predefined symbol corresponding to the second time unit indicates downlink, the transmission direction of the second time unit is indicated to be downlink;
if the predefined symbol corresponding to the second time unit indicates flexible, the transmission direction of the second time unit is indicated to be flexible;
if the predefined symbol corresponding to the second time unit is a first symbol, then: indicating that the second time unit is configured with a third sub-band; or, indicating that the second time unit is configured with the third sub-band and the transmission direction of the second time unit is opposite to the transmission direction indicated by the target information; or, indicating that the transmission configuration of the second time unit is determined according to configuration information of sub-band full duplex.
wherein the first symbol is different from the symbol indicating uplink, the symbol indicating downlink, and the symbol indicating flexible.

In some embodiments, the time domain configuration information indicates a transmission configuration value of time units within one of the following time domain ranges:
all slots;
a time domain range indicated by RRC;
a predefined time domain range;
a time domain range corresponding to a flexible sub-band.

In some embodiments, the method further includes:
transmitting valid time information of the time domain configuration information to the terminal.

In some embodiments, the target information includes part or all of the following information:
uplink and downlink common configuration information;
uplink and downlink dedicated configuration information;
SFI in DCI format 2-0.

An embodiment of the present disclosure provides a terminal, including: a memory, a transceiver, and a processor:
the memory is configured to store a computer program; the transceiver is configured to receive and transmit data under control of the processor; the processor is configured to read the computer program from the memory and perform the following operations:
detecting time domain configuration information transmitted by a network-side device;
in response to detecting the time domain configuration information, determining a transmission configuration of a time unit according to the time domain configuration information;
wherein the transmission configuration includes at least one of the following:
   the time unit is configured with an uplink sub-band;
   the time unit is configured with a downlink sub-band;
   a transmission direction of the time unit.

In some embodiments, the time domain configuration information is carried in predetermined Downlink Control Information (DCI).
wherein the predetermined DCI includes at least one of the following:
a dedicated DCI format corresponding to the time domain configuration information;
DCI format 2-0.

In some embodiments, the time domain configuration information is used to indicate that a transmission direction of the time unit is a first transmission direction;
the first transmission direction is opposite to a second transmission direction of the time unit indicated by target information; or, the first transmission direction is the same as the second transmission direction of the time unit indicated by the target information.

In some embodiments, the time domain configuration information is used to indicate that the time unit is configured with an uplink sub-band or to indicate that the time unit is configured with a downlink sub-band;
wherein, if the target information indicates that the transmission direction of the time unit is uplink, the time domain configuration information indicates that the time unit is configured with a downlink sub-band;
if the target information indicates that the transmission direction of the time unit is downlink, the time domain configuration information indicates that the time unit is configured with an uplink sub-band.

In some embodiments, the time domain configuration information is indicated by at least one of the following manners:
a predefined value;
   or,
a predefined symbol.

In some embodiments, in a case that the time domain configuration information is indicated by a predefined value, the processor is configured to read the computer program from the memory and perform at least one of the following operations:
if a value corresponding to a first time unit is a first value, determining a transmission direction of the first time unit according to target information;
if a value corresponding to the first time unit is a second value, then: determining that the first time unit is configured with a first sub-band; or, determining that the first time unit is configured with the first sub-band and the transmission direction of the first time unit is opposite to the transmission direction indicated by the target information; or, determining the transmission configuration of the first time unit according to configuration information of sub-band full duplex;
wherein the first sub-band is an uplink sub-band or a downlink sub-band.

In some embodiments, the processor is configured to read the computer program from the memory and perform at least one of the following operations:
if the configuration information of sub-band full duplex indicates that a transmission direction of the first time unit is uplink, the transmission direction of the first time unit is determined to be uplink;
if the configuration information of sub-band full duplex indicates that a transmission direction of the first time unit is downlink, the transmission direction of the first time unit is determined to be downlink;
if the configuration information of sub-band full duplex indicates that the first time unit is configured with a second sub-band, the first time unit is determined to be configured with the second sub-band, where the second sub-band is an uplink sub-band or a downlink sub-band.

In some embodiments, in a case that the time domain configuration information is indicated by a predefined symbol, the processor is configured to read the computer program from the memory and perform at least one of the following operations:
if the predefined symbol corresponding to a second time unit indicates uplink, the transmission direction of the second time unit is determined to be uplink;
if the predefined symbol corresponding to the second time unit indicates downlink, the transmission direction of the second time unit is determined to be downlink;
if the predefined symbol corresponding to the second time unit indicates flexible, the transmission direction of the second time unit is determined to be flexible;
if the predefined symbol corresponding to the second time unit is a first symbol, then: determining that the second time unit is configured with a third sub-band; or, determining that the second time unit is configured with the third sub-band and the transmission direction of the second time unit is opposite to the transmission direction indicated by the target information, where the third sub-band is an uplink sub-band or a downlink sub-band; or, determining the transmission configuration of the second time unit according to configuration information of sub-band full duplex;
wherein the first symbol is different from the symbol indicating uplink, the symbol indicating downlink, and the symbol indicating flexible.

In some embodiments, the processor is configured to read the computer program from the memory and perform at least one of the following operations:
if the configuration information of sub-band full duplex indicates that a transmission direction of the second time unit is uplink, the transmission direction of the second time unit is determined to be uplink;
if the configuration information of sub-band full duplex indicates that a transmission direction of the second time unit is downlink, the transmission direction of the second time unit is determined to be downlink.
if the configuration information of sub-band full duplex indicates that the second time unit is configured with a fourth sub-band, the second time unit is determined to be configured with the fourth sub-band, where the fourth sub-band is an uplink sub-band or a downlink sub-band.

In some embodiments, the time domain configuration information indicates a transmission configuration of time units within one of the following time domain ranges:
all slots;
a time domain range indicated by RRC;
a predefined time domain range;
a time domain range corresponding to a flexible sub-band.

In some embodiments, the processor is configured to read the computer program from the memory and perform the following operations:
receiving valid time information of the time domain configuration information transmitted by the network-side device;
determining the transmission configuration of the time unit within the valid time according to the time domain configuration information.

In some embodiments, the processor is configured to read the computer program from the memory and perform the following operations:
performing a first processing in a case that the terminal receives SFI-related information configured by the network-side device via RRC signaling but does not detect the time domain configuration information;
wherein the first processing includes one of the following:
   not performing data transmission and data reception within the valid time of the time domain configuration information;
   determining a transmission direction of the time unit according to target information;
   determining a transmission direction of the time unit according to first time domain configuration information, where the first time domain configuration information is the most recently received time domain configuration information before the current one;
   assuming a default transmission direction of the time unit within the valid time to be a third transmission direction, where the third transmission direction is uplink transmission or downlink reception;
   determining whether to perform data transmission or data reception according to indication information.

In some embodiments, the processor is configured to read the computer program from the memory and perform at least one of the following operations:
if the indication information indicates a third value, data reception is stopped in a third time unit, where the third time unit is a time unit indicated as downlink reception by the target information, or the third time unit is a time unit indicated as downlink reception by both the target information and the first time domain configuration information;
if the indication information indicates a fourth value, data transmission is stopped in a fourth time unit, where the fourth time unit is a time unit indicated as uplink transmission by the target information, or the fourth time unit is a time unit indicated as uplink transmission by both the target information and the first time domain configuration information.

In some embodiments, the target information includes part or all of the following information:
uplink and downlink common configuration information;
uplink and downlink dedicated configuration information;
SFI in DCI format 2-0.

An embodiment of the present disclosure provides a network-side device, including: a memory, a transceiver, and a processor:
the memory is configured to store a computer program; the transceiver is configured to receive and transmit data under control of the processor; the processor is configured to read the computer program from the memory and perform the following operations:
transmitting time domain configuration information to a terminal, where the time domain configuration information is used to indicate a transmission configuration of a time unit;
wherein the transmission configuration includes at least one of the following:
   the time unit is configured with an uplink sub-band;
   the time unit is configured with a downlink sub-band;
   a transmission direction of the time unit.

In some embodiments, the time domain configuration information is carried in a predetermined DCI;
wherein the predetermined DCI includes at least one of the following:
a dedicated DCI format corresponding to the time domain configuration information;
DCI format 2-0.

In some embodiments, the time domain configuration information is used to indicate that a transmission direction of a time unit is a first transmission direction;
the first transmission direction is opposite to a second transmission direction of the time unit indicated by target information; or, the first transmission direction is the same as the second transmission direction of the time unit indicated by the target information.

In some embodiments, the time domain configuration information is used to indicate that the time unit is configured with an uplink sub-band or to indicate that the time unit is configured with a downlink sub-band;
wherein, if the target information indicates that the transmission direction of the time unit is uplink, the time domain configuration information indicates that the time unit is configured with a downlink sub-band;
if the target information indicates that the transmission direction of the time unit is downlink, the time domain configuration information indicates that the time unit is configured with an uplink sub-band.

In some embodiments, the time domain configuration information is indicated by at least one of the following manners:
a predefined value indication;
   or,
a predefined symbol.

In some embodiments, in a case that the time domain configuration information is indicated by a predefined value, the processor is configured to read the computer program from the memory and perform at least one of the following operations:
if a value corresponding to a first time unit is a first value, indicating that the transmission direction of the first time unit is determined according to the target information;
if a value corresponding to the first time unit is a second value, then: indicating that the first time unit is configured with a first sub-band; or, indicating that the first time unit is configured with the first sub-band and the transmission direction of the first time unit is opposite to the transmission direction indicated by the target information; or, indicating that the transmission configuration of the first time unit is determined according to configuration information of sub-band full duplex;
wherein the first sub-band is an uplink sub-band or a downlink sub-band.

In some embodiments, in a case that the time domain configuration information of a time unit is indicated by a predefined symbol, the processor is configured to read the computer program from the memory and perform at least one of the following operations:
if the predefined symbol corresponding to a second time unit indicates uplink, indicating that the transmission direction of the second time unit is uplink;
if the predefined symbol corresponding to the second time unit indicates downlink, indicating that the transmission direction of the second time unit is downlink.
if the predefined symbol corresponding to the second time unit indicates flexible, indicating that the transmission direction of the second time unit is flexible;
if the predefined symbol corresponding to the second time unit is a first symbol, then: indicating that the second time unit is configured with a third sub-band; or, indicating that the second time unit is configured with the third sub-band and that the transmission direction of the second time unit is opposite to the transmission direction indicated by the target information; or, indicating that the transmission configuration of the second time unit is determined according to configuration information of sub-band full duplex;
wherein the first symbol is different from the symbol indicating uplink, the symbol indicating downlink, and the symbol indicating flexible.

In some embodiments, the time domain configuration information indicates a transmission configuration value of time units within one of the following time domain ranges:
all slots;
a time domain range indicated by RRC;
a predefined time domain range;
a time domain range corresponding to a flexible sub-band.

In some embodiments, the processor is configured to read the computer program from the memory and perform the following operation:
transmitting valid time information of the time domain configuration information to the terminal.

In some embodiments, the target information includes part or all of the following information:
uplink and downlink common configuration information;
uplink and downlink dedicated configuration information;
SFI in DCI format 2-0.

An embodiment of the present disclosure provides a time domain configuration information indication apparatus, which is applied to a terminal, including:
a detection unit, configured to detect time domain configuration information transmitted by a network-side device;
a determination unit, configured to determine a transmission configuration of a time unit according to the time domain configuration information in response to detecting the time domain configuration information;
wherein the transmission configuration includes at least one of the following:
   the time unit is configured with an uplink sub-band;
   the time unit is configured with a downlink sub-band;
   a transmission direction of the time unit.

In some embodiments, the time domain configuration information is carried in predetermined Downlink Control Information (DCI);
wherein the predetermined DCI includes at least one of the following:
a dedicated DCI format corresponding to the time domain configuration information;
DCI format 2-0.

In some embodiments, the time domain configuration information is used to indicate that the transmission direction of the time unit is a first transmission direction;
the first transmission direction is opposite to a second transmission direction of the time unit indicated by target information; or, the first transmission direction is the same as the second transmission direction of the time unit indicated by the target information.

In some embodiments, the time domain configuration information is used to indicate that the time unit is configured with an uplink sub-band or to indicate that the time unit is configured with a downlink sub-band;
wherein, if the target information indicates that the transmission direction of the time unit is uplink, the time domain configuration information indicates that the time unit is configured with a downlink sub-band;
if the target information indicates that the transmission direction of the time unit is downlink, the time domain configuration information indicates that the time unit is configured with an uplink sub-band.

In some embodiments, the time domain configuration information is indicated by at least one of the following manners:
a predefined value;
   or,
a predefined symbol.

In some embodiments, in a case that the time domain configuration information is indicated by a predefined value, the determination unit is specifically configured to perform at least one of the following:
if a value corresponding to a first time unit is a first value, determining a transmission direction of the first time unit according to the target information;
if a value corresponding to the first time unit is a second value, then: determining that the first time unit is configured with a first sub-band; or, determining that the first time unit is configured with the first sub-band and that the transmission direction of the first time unit is opposite to the transmission direction indicated by the target information; or, determining the transmission configuration of the first time unit according to configuration information of sub-band full duplex;
wherein the first sub-band is an uplink sub-band or a downlink sub-band.

In some embodiments, the determination unit is specifically configured to perform at least one of the following:
if the configuration information of sub-band full duplex indicates that a transmission direction of the first time unit is uplink, determining that the transmission direction of the first time unit is uplink;
if the configuration information of sub-band full duplex indicates that a transmission direction of the first time unit is downlink, determining that the transmission direction of the first time unit is downlink;
if the configuration information of sub-band full duplex indicates that the first time unit is configured with a second sub-band, determining that the first time unit is configured with the second sub-band, where the second sub-band is an uplink sub-band or a downlink sub-band.

In some embodiments, in a case that the time domain configuration information is indicated by a predefined symbol, the determination unit is specifically configured to perform at least one of the following:
if the predefined symbol corresponding to a second time unit indicates uplink, determining that the transmission direction of the second time unit is uplink;
if the predefined symbol corresponding to the second time unit indicates downlink, determining that the transmission direction of the second time unit is downlink;
if the predefined symbol corresponding to the second time unit indicates flexible, determining that the transmission direction of the second time unit is flexible;
if the predefined symbol corresponding to the second time unit is a first symbol, then: determining that the second time unit is configured with a third sub-band; or, determining that the second time unit is configured with the third sub-band and the transmission direction of the second time unit is opposite to the transmission direction indicated by the target information, where the third sub-band is an uplink sub-band or a downlink sub-band; or, determining the transmission configuration of the second time unit according to configuration information of sub-band full duplex;
wherein the first symbol is different from the symbol indicating uplink, the symbol indicating downlink, and the symbol indicating flexible.

In some embodiments, the determination unit is specifically configured to perform at least one of the following:
if the configuration information of sub-band full duplex indicates that a transmission direction of the second time unit is uplink, determining that the transmission direction of the second time unit is uplink;
if the configuration information of sub-band full duplex indicates that a transmission direction of the second time unit is downlink, determining that the transmission direction of the second time unit is downlink;
if the configuration information of sub-band full duplex indicates that the second time unit is configured with a fourth sub-band, determining that the second time unit is configured with the fourth sub-band, where the fourth sub-band is an uplink sub-band or a downlink sub-band.

In some embodiments, the time domain configuration information indicates a transmission configuration of time units within one of the following time domain ranges:
all slots;
a time domain range indicated by Radio Resource Control (RRC);
a predefined time domain range;
a time domain range corresponding to a flexible sub-band.

In some embodiments, the apparatus further includes:
a first receiving unit, configured to receive valid time information of the time domain configuration information transmitted by the network-side device;
the determination unit is specifically configured to determine the transmission configuration of the time unit within the valid time according to the time domain configuration information.

In some embodiments, the apparatus further includes:
a processing unit, configured to perform a first processing in a case that the terminal receives SFI-related information configured by the network-side device via RRC signaling but does not detect the time domain configuration information;
wherein the first processing includes one of the following:
   not performing data transmission and data reception within the valid time of the time domain configuration information;
   determining a transmission direction of the time unit according to target information;
   determining a transmission direction of the time unit according to first time domain configuration information, where the first time domain configuration information is the most recently received time domain configuration information before the current one;
   assuming a default transmission direction of the time unit within the valid time to be a third transmission direction, where the third transmission direction is uplink transmission or downlink reception;
   determining whether to perform data transmission or data reception according to indication information.

In some embodiments, the processing unit is specifically configured to perform at least one of the following:
if the indication information indicates a third value, stopping data reception in a third time unit, where the third time unit is a time unit indicated as downlink reception by the target information, or is a time unit indicated as downlink reception by both the target information and the first time domain configuration information;
if the indication information indicates a fourth value, stopping data transmission in a fourth time unit, where the fourth time unit is a time unit indicated as uplink transmission by the target information, or is a time unit indicated as uplink transmission by both the target information and the first time domain configuration information.

In some embodiments, the target information includes part or all of the following information:
uplink and downlink common configuration information;
uplink and downlink dedicated configuration information;
SFI in DCI format 2-0.

An embodiment of the present disclosure provides a time domain configuration information indication apparatus, which is applied to a network-side device, including:
a first transmitting unit, configured to transmit time domain configuration information to a terminal, where the time domain configuration information is used to indicate a transmission configuration of a time unit;
wherein the transmission configuration includes at least one of the following:
   the time unit is configured with an uplink sub-band;
   the time unit is configured with a downlink sub-band;
   a transmission direction of the time unit.

In some embodiments, the time domain configuration information is carried in a predetermined DCI;
wherein the predetermined DCI includes at least one of the following:
a dedicated DCI format corresponding to the time domain configuration information;
DCI format 2-0.

In some embodiments, the time domain configuration information is used to indicate that the transmission direction of the time unit is a first transmission direction;
the first transmission direction is opposite to a second transmission direction of the time unit indicated by target information; or, the first transmission direction is the same as the second transmission direction of the time unit indicated by the target information.

In some embodiments, the time domain configuration information is used to indicate that the time unit is configured with an uplink sub-band or to indicate that the time unit is configured with a downlink sub-band;
wherein, if the target information indicates that the transmission direction of the time unit is uplink, the time domain configuration information indicates that the time unit is configured with a downlink sub-band;
if the target information indicates that the transmission direction of the time unit is downlink, the time domain configuration information indicates that the time unit is configured with an uplink sub-band.

In some embodiments, the time domain configuration information is indicated by at least one of the following manners:
a predefined value indication;
   or,
a predefined symbol.

In some embodiments, in a case that the time domain configuration information is indicated by a predefined value, the manner in which the time domain configuration information indicates the transmission configuration of the time unit includes at least one of the following:
if a value corresponding to a first time unit is a first value, indicating that the transmission direction of the first time unit is determined according to the target information;
if a value corresponding to the first time unit is a second value, then: indicating that the first time unit is configured with a first sub-band; or, indicating that the first time unit is configured with the first sub-band and the transmission direction of the first time unit is opposite to the transmission direction indicated by the target information; or, indicating that the transmission configuration of the first time unit is determined according to configuration information of sub-band full duplex;
wherein the first sub-band is an uplink sub-band or a downlink sub-band.

In some embodiments, in a case that the time domain configuration information of the time unit is indicated by a predefined symbol, the manner in which the time domain configuration information indicates the transmission configuration of the time unit includes at least one of the following:
if the predefined symbol corresponding to a second time unit indicates uplink, indicating that the transmission direction of the second time unit is uplink;
if the predefined symbol corresponding to the second time unit indicates downlink, indicating that the transmission direction of the second time unit is downlink;
if the predefined symbol corresponding to the second time unit indicates flexible, indicating that the transmission direction of the second time unit is flexible;
if the predefined symbol corresponding to the second time unit is a first symbol, then: indicating that the second time unit is configured with a third sub-band; or, indicating that the second time unit is configured with the third sub-band and that the transmission direction of the second time unit is opposite to the transmission direction indicated by the target information; or, indicating that the transmission configuration of the second time unit is determined according to configuration information of sub-band full duplex;
wherein the first symbol is different from the symbol indicating uplink, the symbol indicating downlink, and the symbol indicating flexible.

In some embodiments, the time domain configuration information indicates a transmission configuration value of time units within one of the following time domain ranges:
all slots;
a time domain range indicated by RRC;
a predefined time domain range;
a time domain range corresponding to a flexible sub-band.

In some embodiments, the apparatus further includes:
a second transmitting unit, configured to transmit valid time information of the time domain configuration information to the terminal.

In some embodiments, the target information includes part or all of the following information:
uplink and downlink common configuration information;
uplink and downlink dedicated configuration information;
SFI in DCI format 2-0.

An embodiment of the present disclosure provides a processor-readable storage medium storing a computer program, wherein when executed by a processor, the computer program implements the steps of the above-described method for indicating time domain configuration information.

The beneficial effects of the above technical solutions of the present disclosure are as follows:

According to the embodiments of the present disclosure, when a terminal detects time domain configuration information configured by a network-side device, the terminal determines whether a time unit is configured with an uplink sub-band or a downlink sub-band based on the time domain configuration information, or determines a transmission direction of the time unit based on the time domain configuration information. That is, the transmission direction of the time unit is variable, thereby enabling dynamic indication of the transmission direction of the time unit.

### BRIEF DESCRIPTION OF THE DRAWINGS

FIG. 1 shows a first schematic flow chart of a method for indicating time domain configuration information according to an embodiment of the present disclosure;
FIG. 2 shows a second schematic flow chart of a method for indicating time domain configuration information according to an embodiment of the present disclosure;
FIG. 3 shows a first schematic structural diagram of an apparatus for indicating time domain configuration information according to an embodiment of the present disclosure;
FIG. 4 shows a second schematic structural diagram of an apparatus for indicating time domain configuration information according to an embodiment of the present disclosure;
FIG. 5 shows a schematic structural diagram of a terminal according to an embodiment of the present disclosure;
FIG. 6 shows a schematic structural diagram of a network-side device according to an embodiment of the present disclosure.

### DETAILED DESCRIPTION

To make the technical problems to be solved, technical solutions, and advantages of the present disclosure more apparent, detailed descriptions are provided below in conjunction with the accompanying drawings and specific embodiments. In the following description, specific details such as particular configurations and components are provided merely to facilitate a comprehensive understanding of embodiments of the present disclosure. Therefore, those skilled in the art should understand that various modifications and changes may be made to the embodiments described herein without departing from the scope and spirit of the present disclosure. Furthermore, known functions and structures are omitted for the sake of clarity and brevity.

It should be understood that the terms "an embodiment" or "one embodiment" throughout the specification mean that a particular feature, structure, or characteristic described in connection with the embodiment is included in at least one embodiment of the present disclosure. Hence, the appearances of the phrases "in an embodiment" or "in one embodiment" in various places throughout the specification are not necessarily all referring to the same embodiment. Moreover, the particular features, structures, or characteristics may be combined in any suitable manner in one or more embodiments.

In various embodiments of the present disclosure, it should be understood that the sequence numbers of the following processes do not imply a temporal execution order. The execution order of the processes should be determined based on their functionalities and inherent logic, and should not be construed as limitations on the implementation procedures of the embodiments of the present disclosure.

In the embodiments of the present disclosure, the term "and/or" used to describe relationships between associated objects indicates that three relationships may exist, for example, A and/or B may refer to: A alone, both A and B, or B alone. The character "/" generally indicates an "or" relationship between the associated objects before and after it.

In the embodiments of the present disclosure, the term "multiple" refers to two or more, and other quantifiers shall be interpreted accordingly.

The technical solutions in the embodiments of the present disclosure are described clearly and completely below in conjunction with the accompanying drawings. It is apparent that the described embodiments are merely part of the embodiments of the present disclosure, not all of the embodiments. Based on the embodiments of the present disclosure, all other embodiments obtained by those of ordinary skill in the art without creative efforts shall fall within the protection scope of the present disclosure.

Embodiments of the present disclosure provide a method, an apparatus, a terminal, and a network-side device for indicating time domain configuration information, so as to solve the problem that a transmission direction of a terminal cannot be changed at a certain moment.

The method and apparatus are based on the same inventive concept. Since the principles for solving the problem are similar between the method and the apparatus, the implementations of the apparatus and the method may refer to each other, and repeated descriptions are omitted for brevity.

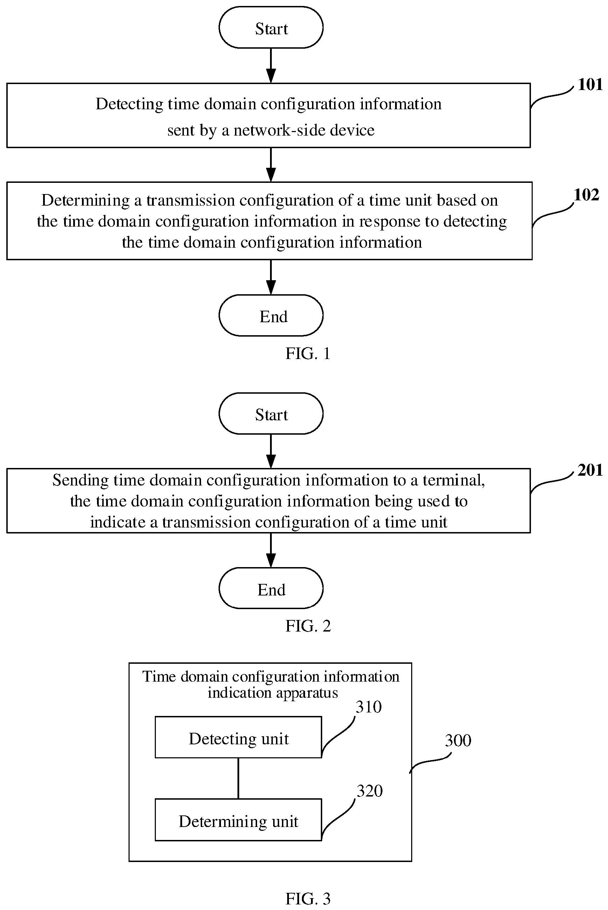

As shown in FIG. 1, an embodiment of the present disclosure provides a method for indicating time domain configuration information, which is applied to a terminal and specifically includes the following steps:
step 101: detecting time domain configuration information transmitted by a network-side device;
step 102: in response to detecting the time domain configuration information, determining a transmission configuration of a time unit based on the time domain configuration information;
wherein the transmission configuration includes at least one of the following:
   1) the time unit is configured with an uplink (UL) sub-band;
   2) the time unit is configured with a downlink (DL) sub-band;
   3) a transmission direction of the time unit.

In this embodiment, the time domain configuration information may be used to indicate the transmission direction of the time unit or whether the time unit is configured with an uplink or downlink sub-band. If the terminal detects the time domain configuration information, it may determine the transmission configuration of the time unit based on the time domain configuration information. For example, the terminal may determine whether a certain time unit is configured with an uplink or downlink sub-band, or determine the transmission direction of a certain time unit.

Taking the terminal determining whether a time unit is configured with an uplink or downlink sub-band based on the time domain configuration information as an example, the configured sub-band of the time unit may be opposite to the transmission direction of the time unit. For example, the time domain configuration information may indicate that a downlink sub-band is configured for an uplink time unit. The terminal may perform downlink reception in the uplink time unit or may choose not to perform downlink reception. Alternatively, the time domain configuration information may indicate that an uplink sub-band is configured for a downlink time unit. The terminal may perform uplink transmission in the downlink time unit or may choose not to perform uplink transmission.

Taking the terminal determining the transmission direction of a time unit based on the time domain configuration information as an example, the configured transmission direction of the time unit may be opposite to its original transmission direction. For instance, the time domain configuration information may indicate that the terminal performs downlink reception in an uplink time unit, that is, receiving downlink data on a downlink sub-band within the uplink time unit; or, the time domain configuration information may indicate that the terminal performs uplink transmission in a downlink time unit, that is, transmitting uplink data on an uplink sub-band within the downlink time unit.

It should be noted that in the embodiments of the present disclosure, the uplink time unit refers to a time unit determined to be uplink based on target information, and the downlink time unit refers to a time unit determined to be downlink based on the target information. The target information includes part or all of the following: uplink and downlink common configuration information, uplink and downlink dedicated configuration information, and Slot Format Indication (SFI) in DCI format 2-0.

The time unit may be any of the following: frame, sub-frame, slot, symbol, and the like.

Current research is based on the assumption that the network side has the capability of simultaneous transmission and reception (referred to as duplex capability), that is, the network-side device can simultaneously perform uplink and downlink communication with different User Equipments (UEs) at the same moment. The UE side, however, does not have duplex capability, meaning that the UE can only transmit uplink or receive downlink at a given time, and its transmission direction cannot be changed. According to the embodiments of the present disclosure, when the terminal detects time domain configuration information configured by the network-side device, the terminal determines whether a time unit is configured with an uplink sub-band or a downlink sub-band, or determines the transmission direction of the time unit based on the time domain configuration information. That is, the transmission direction of the time unit is variable, enabling dynamic indication of the transmission direction of the time unit.

In some embodiments, the time domain configuration information is carried in predetermined Downlink Control Information (DCI) and may be indicated through a reserved format.

The predetermined DCI includes at least one of the following:
1) a dedicated DCI format corresponding to the time domain configuration information, i.e., a specific DCI format designed for the time domain configuration information;
2) DCI format 2-0, which allows the network-side device to transmit the time domain configuration information to the terminal using DCI format 2-0.

In some embodiments, the time domain configuration information indicates the transmission configuration of time units within one of the following time domain ranges:
1) all slots: the time domain configuration information may be applied to time units in all slots, i.e., indicating the transmission configuration of time units within all slots;
2) a time domain range indicated by Radio Resource Control (RRC): the time domain configuration information may be applied to the time domain range of sub-band full duplex (SBFD) as indicated by RRC, i.e., indicating the transmission configuration of time units within the RRC-indicated SBFD time domain range. Alternatively, the time domain configuration information may be applied to another time domain range indicated by RRC, where RRC indicates the effective time range of the time domain configuration information, and the time domain configuration information is valid for time units within the effective time range;
3) a predefined time domain range: the time domain configuration information may be applied to a protocol-defined time domain range, i.e., indicating the transmission configuration of time units within the predefined time domain range.
4) a time domain range corresponding to a flexible sub-band. The network-side device may configure a flexible sub-band in certain time units. For example, it may configure an uplink sub-band (Flexible) on part of the downlink (DL)/flexible (F) symbols. The transmission configuration of time units within such a time domain range is flexible and can be dynamically changed, thus referred to as a flexible sub-band. The time domain configuration information is only applied to time units configured with a flexible sub-band.

As an optional embodiment, the time domain configuration information is used to indicate that the transmission direction of the time unit is a first transmission direction;
the first transmission direction is opposite to a second transmission direction of the time unit indicated by target information; or, the first transmission direction is the same as the second transmission direction of the time unit indicated by the target information.

In this embodiment, the time domain configuration information may indicate the transmission direction of a time unit. The transmission direction indicated by the time domain configuration information may be opposite to or the same as the original transmission direction of the time unit. That is, the network-side device may change the transmission direction of a time unit by using time domain configuration information. For example, when the first transmission direction is opposite to the second transmission direction, if a time unit is indicated as an uplink time unit according to the target information, the network-side device may indicate via the time domain configuration information that the time unit performs downlink reception, i.e., receiving downlink data on the downlink sub-band of that time unit; or, if the time unit is indicated as a downlink time unit based on the target information, the network-side device may indicate via the time domain configuration information that the time unit performs uplink transmission, i.e., transmitting uplink data on the uplink sub-band of that time unit.

The network-side device may dynamically configure the transmission direction of a time unit by indicating a first transmission direction (uplink or downlink) as a second transmission direction (downlink or uplink), or by reverting the second transmission direction back to the first transmission direction, using UE group-specific time domain configuration information. Here, the first transmission direction may be U (uplink) or D (downlink) as indicated by the target information, and the second transmission direction is opposite to the first transmission direction. That is, the time domain configuration information may change the transmission direction of a time unit indicated as U/D in the target information to D/U.

As an optional embodiment, the time domain configuration information is used to indicate that the time unit is configured with an uplink sub-band or that the time unit is configured with a downlink sub-band;
wherein, if the target information indicates that the transmission direction of the time unit is uplink, the time domain configuration information indicates that the time unit is configured with a downlink sub-band.

If the target information indicates that the transmission direction of the time unit is downlink, the time domain configuration information indicates that the time unit is configured with an uplink sub-band.

In this embodiment, the network-side device indicates, via the time domain configuration information, whether a time unit is configured with an uplink sub-band or a downlink sub-band. In some embodiments, if a time unit is configured with an uplink or downlink sub-band, the transmission direction of the time unit may be the same as or different from the direction of the configured sub-band. For example, if the target information indicates that the transmission direction of the time unit is uplink (i.e., the time unit is an uplink transmission unit), the network-side device may indicate via the time domain configuration information that the time unit is configured with a downlink sub-band. The terminal may then perform downlink reception in this time unit (or may choose not to). Alternatively, if the target information indicates that the transmission direction of the time unit is downlink (i.e., the time unit is a downlink time unit), the network-side device may indicate that the time unit is configured with an uplink sub-band. The terminal may then perform uplink transmission in this time unit (or may choose not to).

In some embodiments, the target information includes part or all of the following:
1) uplink and downlink common configuration information; for example, TDD uplink and downlink common configuration information such as tdd-UL-DL-configurationCommon.
2) uplink and downlink dedicated configuration information; for example, TDD uplink and downlink dedicated configuration information such as tdd-UL-DL-ConfigurationDedicated.
3) Slot Format Indication (SFI) in DCI format 2-0.

In this embodiment, before the network-side device configures the time domain configuration information for the terminal, it configures the transmission direction of the time unit via the target information. For example, the transmission direction may be determined through tdd-UL-DL-configurationCommon, tdd-UL-DL-ConfigurationDedicated, or SFI in DCI format 2-0. The network-side device may then change the transmission direction of that time unit, as configured by the target information, using the time domain configuration information.

In some embodiments, the time domain configuration information is indicated by at least one of the following methods:
1) a predefined value. The time domain configuration information may be indicated as a predefined value, such as 0 or 1, with different values representing different meanings;
   or,
2) a predefined symbol. The time domain configuration information may be indicated as a predefined symbol, with different symbols representing different meanings. For example, the symbol U indicates uplink, the symbol D indicates downlink, the symbol F indicates a flexible direction, and the symbol X indicates that the time unit is configured with an uplink sub-band or a downlink sub-band. It should be noted that the symbols and their meanings described in this embodiment are merely illustrative and are not intended to be limiting.

As an optional embodiment, in a case where the time domain configuration information is indicated by a predefined value, determining the transmission configuration of a time unit based on the time domain configuration information includes at least one of the following:
(1) if a value corresponding to a first time unit is a first value, determining the transmission direction of the first time unit according to the target information;
(2) if the value corresponding to the first time unit is a second value, then: determining that the first time unit is configured with a first sub-band; or, determining that the first time unit is configured with the first sub-band and that the transmission direction of the first time unit is opposite to the transmission direction indicated by the target information; or, determining the transmission configuration of the first time unit according to configuration information of sub-band full duplex, wherein the first sub-band is an uplink sub-band or a downlink sub-band.

Taking an example where the first value is 0, the second value is 1, and the time unit is a symbol, if the network-side device indicates that the value corresponding to a certain symbol is 0, this indicates that the transmission direction of the symbol is determined according to the target information. For example, the transmission direction may be determined based on at least one of tdd-UL-DL-configurationCommon, tdd-UL-DL-ConfigurationDedicated, and SFI, meaning that no sub-band is configured on the symbol. The UE determines the transmission direction of the symbol to be downlink (D), uplink (U), or flexible based on the configured and/or received tdd-UL-DL-configurationCommon, tdd-UL-DL-ConfigurationDedicated, or SFI.

If the network-side device indicates that the value corresponding to a certain symbol is 1, this indicates that the symbol is configured with an uplink or downlink sub-band, or that the symbol is configured with an uplink or downlink sub-band and the transmission direction of the symbol is uplink or downlink, or that the transmission configuration of the symbol is determined according to configuration information of sub-band full duplex. Whether the symbol is configured with an uplink or downlink sub-band may be determined according to the transmission direction of the symbol as indicated by the target information. For example, if at least one of tdd-UL-DL-configurationCommon, tdd-UL-DL-ConfigurationDedicated, or SFI indicates that the symbol is an uplink symbol, and the network-side device indicates that the value corresponding to the symbol is 1, this means that the symbol is configured with a downlink sub-band. The network-side device may also indicate that the transmission direction of the time unit is downlink. Alternatively, if at least one of tdd-UL-DL-configurationCommon, tdd-UL-DL-ConfigurationDedicated, or SFI indicates that the symbol is a downlink symbol, and the network-side device indicates that the value corresponding to the symbol is 1, this means that the symbol is configured with an uplink sub-band. The network-side device may also indicate that the transmission direction of the symbol is uplink.

In this embodiment, when the transmission configuration of the first time unit is determined according to the configuration information of sub-band full duplex, the sub-band full duplex configuration information may be semi-statically configured by the network-side device (for example, configured via RRC signaling). In this case, it is equivalent to the network-side device dynamically confirming the semi-statically configured sub-band full duplex configuration information via DCI format 2-0. That is, when the value corresponding to the symbol is 1, the transmission configuration of the time unit is determined according to the time domain information of sub-band full duplex configured by RRC.

In some embodiments, determining the transmission configuration of the first time unit according to the sub-band full duplex configuration information includes at least one of the following:
1) if the sub-band full duplex configuration information indicates that the transmission direction of the first time unit is uplink, the transmission direction of the first time unit is determined to be uplink;
2) if the sub-band full duplex configuration information indicates that the transmission direction of the first time unit is downlink, the transmission direction of the first time unit is determined to be downlink;
3) if the sub-band full duplex configuration information indicates that the first time unit is configured with a second sub-band, it is determined that the first time unit is configured with the second sub-band, wherein the second sub-band is an uplink sub-band or a downlink sub-band. Specifically, whether the first time unit is configured with an uplink or downlink sub-band may be determined based on the transmission direction of the first time unit indicated by the target information. For example, if at least one of tdd-UL-DL-configurationCommon, tdd-UL-DL-ConfigurationDedicated, or SFI indicates that the first time unit is downlink, then the second sub-band may be an uplink sub-band; if at least one of tdd-UL-DL-configurationCommon, tdd-UL-DL-ConfigurationDedicated, or SFI indicates that the first time unit is uplink, then the second sub-band may be a downlink sub-band.

The following is an example illustrating the implementation method of indicating time domain configuration information using a predefined value.

For slot n, the time domain configuration information indicated by SFI in DCI format 2-0 is 00001111111111. Since the values corresponding to symbols 1 to 4 are 0, the transmission direction for symbols 1 to 4 is determined based on at least one of the configured and/or received tdd-UL-DL-configurationCommon, tdd-UL-DL-ConfigurationDedicated, or SFI. The values corresponding to symbols 5 to 14 are 1, indicating that these symbols include UL sub-bands or DL sub-bands. Whether they are UL or DL sub-bands may be determined based on the transmission direction of the symbols as indicated by the configured and/or received tdd-UL-DL-configurationCommon, tdd-UL-DL-ConfigurationDedicated, or SFI. If the symbol is indicated as D, then the symbol is configured with a UL sub-band; if the symbol is indicated as U, then the symbol is configured with a DL sub-band. Other methods may also be used for determination, which are not limited herein.

Or, for symbols 5 to 14, a UL sub-band or a DL sub-band is included; and the transmission direction of symbols 5 to 14 is uplink or downlink. Specifically, whether a UL sub-band or a DL sub-band is configured may be determined according to the transmission direction of the symbol as indicated by at least one of the configured and/or received tdd-UL-DL-configurationCommon, tdd-UL-DL-ConfigurationDedicated, or SPI; if the symbol is indicated as D, the symbol is configured with a UL sub-band; if the symbol is indicated as U, the symbol is configured with a DL sub-band. Other determination methods may also be used, which are not limited herein.

Or, for symbols 5 to 14, the transmission configuration is determined according to sub-band full duplex configuration information configured by RRC; for example, if the sub-band full duplex configuration information of the slot is indicated as DDDDDDXXXXUUUU, and the fifth and sixth symbols are configured as D, this indicates that the transmission direction of symbols 5 and 6 is downlink; if the eleventh to fourteenth symbols are configured as U, this indicates that the transmission direction of symbols 11 to 14 is uplink. Symbols 7 to 10 are indicated as X, indicating that the part of symbols is configured with a second sub-band; whether the second sub-band is a UL sub-band or a DL sub-band may be determined according to the transmission direction of the symbol as indicated by at least one of the configured and/or received tdd-UL-DL-configurationCommon, tdd-UL-DL-ConfigurationDedicated, or SFI; if a symbol is indicated as D, the symbol is configured with a UL sub-band; if a symbol is indicated as U, the symbol is configured with a DL sub-band. Other determination methods may also be used, which are not limited herein.

In some embodiments, in a case where the time domain configuration information is indicated by a predefined symbol, determining the transmission configuration of the time unit based on the time domain configuration information includes at least one of the following:
(1) if the predefined symbol corresponding to a second time unit indicates uplink, determining that the transmission direction of the second time unit is uplink; the predefined symbol used for indicating uplink may be U; for example, if the network-side device indicates that the symbol corresponding to a certain time unit is U, it indicates that the transmission direction of the symbol is uplink.
(2) if the predefined symbol corresponding to the second time unit indicates downlink, determining that the transmission direction of the second time unit is downlink; the predefined symbol used for indicating downlink may be D; for example, if the network-side device indicates that the symbol corresponding to a certain time unit is D, it indicates that the transmission direction of the symbol is downlink;
(3) if the predefined symbol corresponding to the second time unit indicates a flexible direction, determining that the transmission direction of the second time unit is the flexible direction; the predefined symbol used for indicating the flexible direction may be F; for example, if the network-side device indicates that the symbol corresponding to a certain time unit is F, it indicates that the transmission direction of the symbol is the flexible direction;
(4) if the predefined symbol corresponding to the second time unit is a first symbol, then: determining that the second time unit is configured with a third sub-band; or, determining that the second time unit is configured with the third sub-band and that the transmission direction of the second time unit is opposite to the transmission direction indicated by the target information; or, determining the transmission configuration of the second time unit according to the sub-band full duplex configuration information; wherein the first symbol is different from the symbol indicating uplink, the symbol indicating downlink, and the symbol indicating a flexible direction.

The first symbol may be predefined and is different from the symbol indicating uplink (e.g., U), the symbol indicating downlink (e.g., D), and the symbol indicating a flexible direction (e.g., F). If the network-side device configures the symbol corresponding to a certain time unit as the first symbol, it indicates that the time unit is configured with an uplink sub-band or a downlink sub-band; or the time unit is configured with an uplink sub-band or a downlink sub-band and the transmission direction of the time unit is uplink or downlink; or it indicates that the transmission configuration of the time unit is determined according to the sub-band full duplex configuration information.

In some embodiments, whether the time unit is configured with an uplink sub-band or a downlink sub-band may be determined according to the transmission direction of the time unit as indicated by the target information. For example, if at least one of tdd-UL-DL-configurationCommon, tdd-UL-DL-ConfigurationDedicated, or SFI indicates that the transmission direction of the second time unit is downlink, the second time unit is configured with an uplink sub-band; if the transmission direction of the second time unit is indicated as uplink, the second time unit is configured with a downlink sub-band.

In some embodiments, determining the transmission configuration of the second time unit according to the sub-band full duplex configuration information includes at least one of the following:
1) if the sub-band full duplex configuration information indicates that the transmission direction of the second time unit is uplink, determining that the transmission direction of the second time unit is uplink;
2) if the sub-band full duplex configuration information indicates that the transmission direction of the second time unit is downlink, determining that the transmission direction of the second time unit is downlink;
3) if the sub-band full duplex configuration information indicates that the second time unit is configured with a fourth sub-band, determining that the second time unit is configured with the fourth sub-band, wherein the fourth sub-band is an uplink sub-band or a downlink sub-band. Specifically, whether the second time unit is configured with an uplink sub-band or a downlink sub-band may be determined according to the transmission direction of the second time unit as indicated by the target information; for example, if at least one of the configured or received tdd-UL-DL-configurationCommon, tdd-UL-DL-ConfigurationDedicated, or SFI indicates that the second time unit is downlink, the fourth sub-band may be an uplink sub-band; if at least one of tdd-UL-DL-configurationCommon, tdd-UL-DL-ConfigurationDedicated, or SFI indicates that the second time unit is uplink, the fourth sub-band may be a downlink sub-band.

For example, the network-side device may indicate the time domain configuration information of the time unit using symbols such as "U/D/F/X" ; that is, on the basis of the symbol types U, D, and F, an additional symbol X (only as an example; other symbols may also be used) is added, where the symbol X indicates that an uplink sub-band is included in the symbol types indicated as D/F in at least one of tdd-UL-DL-configurationCommon, tdd-UL-DL-ConfigurationDedicated, or SFI; or the symbol X indicates that a downlink sub-band is included in the symbol types indicated as U/F in at least one of tdd-UL-DL-configurationCommon, tdd-UL-DL-ConfigurationDedicated, or SFI.

According to the embodiments of the present disclosure, the network-side device transmits the time domain configuration information to the terminal, and may configure an uplink sub-band or configure an uplink sub-band and perform uplink transmission in a time unit indicated as downlink by the target information; may configure a downlink sub-band or configure a downlink sub-band and perform downlink reception in a time unit indicated as uplink by the target information; or may configure an uplink sub-band, a downlink sub-band, configure an uplink sub-band and perform uplink transmission, or configure a downlink sub-band and perform downlink reception in a time unit indicated as flexible by the target information.

In some embodiments, the method further includes: receiving effective time information of the time domain configuration information transmitted by the network-side device;

The determining of the transmission configuration of the time unit according to the time domain configuration information includes: determining the transmission configuration of the time unit within the effective time based on the time domain configuration information.

In the embodiment, the effective time of the time domain configuration information may be configured via RRC; or may be indicated via DCI format 2-0, for example, an SFI index may be a joint encoding of the time domain configuration information and the effective time.

Optionally, the method further includes: performing a first processing in a case where the terminal receives SFI-related information configured by the network-side device via RRC signaling and fails to detect the time domain configuration information.

In the embodiment, when the network-side device transmits the time domain configuration information to the terminal, it is possible that the terminal misses or misdetects the information, resulting in the terminal failing to receive the time domain configuration information. If the network-side device configures SFI-related information for the terminal via RRC signaling, and the terminal receives the SFI-related information but does not detect the time domain configuration information, then the first processing may be performed. For example, if the network-side device configures SFI-related information for a UE group via RRC and sends DCI format 2-0 to the corresponding UE group, but a certain UE fails to detect the DCI format 2-0, the first processing may be performed.

The SFI-related information may be used to notify the terminal that the network-side device is to transmit the time domain configuration information; the SFI-related information may include: transmission notification information of the time domain configuration information (such as transmission notification of DCI format 2-0); and transmission configuration information of the time domain configuration information, such as transmission time and transmission location of DCI format 2-0.

In some embodiments, the first processing includes at least one of the following:
1) data transmission and data reception are not performed within the effective time of the time domain configuration information; a constraint by protocol may be applied to restrict data transmission and reception within the effective time, for example, the UE does not perform transmission or reception within the effective time corresponding to the DCI format 2-0.
   The effective time may be, for example: a monitoring period of a Physical Downlink Control Channel (PDCCH) corresponding to the DCI format 2-0; or a duration of a slot format combination.
2) determining the transmission direction of the time unit according to the target information; in this case, the UE may determine the transmission direction of the time unit based on the original configuration method. For example, the UE falls back to a legacy TDD configuration and determines the transmission direction within the effective time according to at least one of tdd-UL-DL-configurationCommon, tdd-UL-DL-ConfigurationDedicated, SFI, or DCI format 2-0 (legacy indication content).
3) determining the transmission direction of the time unit based on the first time domain configuration information, where the first time domain configuration information is the time domain configuration information most recently received by the terminal prior to the undetected time domain configuration information; in this case, the UE may determine the transmission direction of the time unit within the effective time according to the most recently received time domain configuration information before the currently undetected time domain configuration information.
4) defaulting the transmission direction of the time unit within the effective time to a third transmission direction, where the third transmission direction is uplink transmission or downlink reception; for example, the UE may default the transmission direction of the time unit within the effective time to D or U.
5) determining whether to perform data transmission or data reception based on indication information. The network-side device may transmit indication information to the terminal to instruct the behavior of the terminal.

In some embodiments, the determining of whether to perform data transmission or data reception based on the indication information includes at least one of the following:
if the indication information indicates a third value, data reception is stopped in a third time unit, where the third time unit is a time unit indicated by the target information as downlink reception, or the third time unit is a time unit indicated as downlink reception by both the target information and the first time domain configuration information;
if the indication information indicates a fourth value, data transmission is stopped in a fourth time unit, where the fourth time unit is a time unit indicated by the target information as uplink transmission, or the fourth time unit is a time unit indicated as uplink transmission by both the target information and the first time domain configuration information.

In the embodiment, the third value and the fourth value are different. For example, the third value is 1 and the fourth value is 0, or the third value is 0 and the fourth value is 1, which is not specifically limited herein. Taking the third value being 1 and the fourth value being 0 as an example: if the terminal determines that the indication information indicates 1, it may be considered that the network-side device increases the resources used for uplink transmission. For example, the SBFD configuration is updated from the previous configuration of DDXXU (where X indicates that uplink transmission may be performed on the UL sub-band) to the current configuration of DXXXU. In this case, the UE no longer performs data reception or transmission in the previously indicated DD time units (i.e., the third time unit), because the network-side device may update the previous two Ds to Xs in the current SBFD configuration. In some embodiments, the terminal may continue uplink transmission in the time units previously configured as XXU.

If the terminal determines that the indication information indicates 0, it may be considered that the network-side device increases the resources used for downlink reception. For example, the SBFD configuration is updated from the previous configuration of DDXXU (where X indicates that uplink transmission may be performed on the UL sub-band) to the current configuration of DDDXU. In this case, the UE no longer performs data transmission at the positions previously indicated as XX, because the network-side device may update the middle two Xs to Ds in the current SBFD configuration. In some embodiments, the terminal continues to perform data reception in the direction previously configured as D.

The embodiments of the present disclosure may be applied to a Time Division Duplex (TDD) system, and may also be applied to a Frequency Division Duplex (FDD) system.

In the embodiments of the present disclosure, the terminal, upon detecting the time domain configuration information configured by the network-side device, determines whether a time unit is configured with an uplink sub-band or a downlink sub-band based on the time domain configuration information, or determines the transmission direction of the time unit based on the time domain configuration information, i.e., the transmission direction of the time unit is variable, thereby achieving dynamic indication of the transmission direction of the time unit.

As shown in FIG. 2, the embodiments of the present disclosure provide a method for indicating time domain configuration information, which is applied to a network-side device. The method includes:
Step 201: transmitting time domain configuration information to a terminal, where the time domain configuration information is used to indicate a transmission configuration of a time unit;
wherein the transmission configuration includes at least one of the following:
   the time unit is configured with an uplink sub-band;
   the time unit is configured with a downlink sub-band;
   the transmission direction of the time unit.

In this embodiment, the time domain configuration information may be used to indicate the transmission direction of a time unit or whether the time unit is configured with an uplink sub-band or a downlink sub-band, such that the terminal determines the transmission configuration of the time unit based on the time domain configuration information. For example, the terminal may determine whether a time unit is configured with an uplink sub-band or a downlink sub-band, or determine the transmission direction of a time unit.

Taking the indication of whether a time unit is configured with an uplink sub-band or a downlink sub-band as an example, the sub-band configured for the time unit may be opposite to the transmission direction of the time unit. For example, the time domain configuration information may indicate that a downlink sub-band is configured for an uplink time unit, and the terminal may perform downlink reception in the uplink time unit or may not perform downlink reception; or, the time domain configuration information may indicate that an uplink sub-band is configured for a downlink time unit, and the terminal may perform uplink transmission in the downlink time unit or may not perform uplink transmission.

Taking the indication of the transmission direction of a time unit by the time domain configuration information as an example, the transmission direction configured for the time unit may be opposite to the original transmission direction of the time unit. For example, the time domain configuration information may indicate that the terminal performs downlink reception in an uplink time unit, that is, receives downlink on a downlink sub-band of the uplink time unit; or, the time domain configuration information may indicate that the terminal performs uplink transmission in a downlink time unit, that is, transmits uplink on an uplink sub-band of the downlink time unit.

It should be noted that, in the embodiments of the present disclosure, an uplink time unit refers to a time unit determined to be uplink based on the target information, and a downlink time unit refers to a time unit determined to be downlink based on the target information.

In the embodiments of the present disclosure, the network-side device transmits time domain configuration information to the terminal. The time domain configuration information may indicate whether a time unit is configured with an uplink sub-band or a downlink sub-band, or may indicate the transmission direction of the time unit, thereby achieving dynamic indication of the transmission direction of the time unit.

In some embodiments, the time domain configuration information is carried in a predefined DCI;
wherein the predefined DCI includes at least one of the following:
a dedicated DCI format corresponding to the time domain configuration information; that is, a dedicated DCI format designed for the time domain configuration information.

DCI format 2-0, where the network-side device may transmit the time domain configuration information to the terminal via DCI format 2-0.

In some embodiments, the time domain configuration information indicates a transmission configuration value of a time unit within one of the following time domain ranges:
1) all slots; the time domain configuration information may be applied to time units in all slots, that is, it indicates the transmission configuration of time units in all slots.
2) a time domain range indicated by the RRC; the time domain configuration information may be applied to the time domain range of a sub-band full duplex (SBFD) indicated by the RRC, that is, it indicates the transmission configuration of time units within the SBFD time domain range indicated by the RRC; or, the time domain configuration information may be applied to other time domain ranges indicated by the RRC, that is, the RRC indicates the effective time range of the time domain configuration information, and the time domain configuration information is valid for time units within the effective time range.
3) a predefined time domain range; the time domain configuration information may be applied to a time domain range predefined in the protocol, that is, it indicates the transmission configuration of time units within the predefined time domain range.

The time-domain range corresponds to a flexible sub-band. A network-side device may configure a flexible sub-band in some time units, for example, configure an uplink sub-band on some downlink/flexible symbols. The transmission configuration of the time units within the time-domain range is flexible and can be dynamically changed, and therefore is referred to as a flexible sub-band. The time-domain configuration information is only applicable to the time units configured with the flexible sub-band.

Optionally, the time-domain configuration information is used to indicate that a transmission direction of a time unit is a first transmission direction;
wherein the first transmission direction is opposite to a second transmission direction of the time unit indicated by target information; or, the first transmission direction is the same as the second transmission direction of the time unit indicated by the target information.

In this embodiment, the time-domain configuration information may be used to indicate the transmission direction of the time unit; wherein the transmission direction indicated by the time-domain configuration information may be the same as or different from an original transmission direction of the time unit. That is, the network-side device may change the transmission direction of the time unit through the time-domain configuration information. Taking the case where the first transmission direction is opposite to the second transmission direction as an example, if the time unit is indicated as an uplink time unit according to the target information, the network-side device may indicate that the time unit performs downlink reception through the time-domain configuration information, that is, perform downlink reception on a downlink sub-band of the time unit; or, if the time unit is indicated as a downlink time unit according to the target information, the network-side device may indicate that the time unit performs uplink transmission through the time-domain configuration information, that is, perform uplink transmission on an uplink sub-band of the time unit.

Optionally, the time-domain configuration information is used to indicate that the time unit is configured with an uplink sub-band or to indicate that the time unit is configured with a downlink sub-band;
wherein, if the target information indicates that the transmission direction of the time unit is uplink, the time-domain configuration information indicates that the time unit is configured with a downlink sub-band;
if the target information indicates that the transmission direction of the time unit is downlink, the time-domain configuration information indicates that the time unit is configured with an uplink sub-band.

In this embodiment, the network-side device indicates whether the time unit is configured with an uplink sub-band or a downlink sub-band through the time-domain configuration information. In some embodiments, if the time unit is configured with an uplink or downlink sub-band, the transmission direction of the time unit may be the same as or different from the transmission direction of the configured sub-band. For example, if the target information indicates that the transmission direction of the time unit is uplink, that is, the time unit is an uplink transmission unit, the network-side device may indicate that the time unit is configured with a downlink sub-band through the time-domain configuration information, so that the terminal may perform downlink reception in the time unit (or may not perform downlink reception); or, if the target information indicates that the transmission direction of the time unit is downlink, that is, the time unit is a downlink transmission unit, the network-side device may indicate that the time unit is configured with an uplink sub-band through the time-domain configuration information, so that the terminal may perform uplink transmission in the time unit (or may not perform uplink transmission).

In some embodiments, the target information includes at least part of the following information:
uplink and downlink common configuration information; wherein the information is, for example, tdd-UL-DL-configurationCommon.
uplink and downlink dedicated configuration information; wherein the information is, for example, tdd-UL-DL-ConfigurationDedicated.
SFI in DCI format 2-0.

In this embodiment, before the network-side device configures the time-domain configuration information for the terminal, the transmission direction of the time unit is configured through the target information, for example, through tdd-UL-DL-configurationCommon, or through tdd-UL-DL-ConfigurationDedicated, or through SFI in DCI format 2-0 to configure the transmission direction of the terminal in a certain time unit. The network-side device may change the transmission direction of the time unit configured by the above target information through the time-domain configuration information.

In some embodiments, the time-domain configuration information is indicated in at least one of the following ways:
predefined numerical indication; wherein the time-domain configuration information may be indicated as a predefined number, for example, 0 and 1, and different numbers indicate different information.
   or,
predefined symbol; wherein the time-domain configuration information may be indicated as a predefined symbol, and different symbols indicate different information. For example, the symbol U indicates uplink, the symbol D indicates downlink, the symbol F indicates a flexible direction, and the symbol X indicates that the time unit is configured with an uplink sub-band or a downlink sub-band. It should be noted that the symbols and meanings listed in this embodiment are merely exemplary and are not specifically limited.

Optionally, in a case where the time-domain configuration information is indicated by a predefined number, the manner in which the time-domain configuration information indicates the transmission configuration of the time unit includes at least one of the following:
(1) if a value corresponding to a first time unit is a first value, the transmission direction of the first time unit is determined according to target information;
(2) if a value corresponding to a first time unit is a second value, the following is indicated: the first time unit is configured with a first sub-band; or, the first time unit is configured with the first sub-band and a transmission direction of the first time unit is opposite to a transmission direction indicated by target information; or, a transmission configuration of the first time unit is determined according to sub-band full-duplex configuration information; wherein the first sub-band is an uplink sub-band or a downlink sub-band.

Taking the first value as 0, the second value as 1, and the time unit as a symbol as an example, if the network-side device indicates that a value corresponding to a symbol is 0, it indicates that a transmission direction of the symbol is determined according to target information, that is, no sub-band exists on the symbol, and the UE determines that the transmission direction of the symbol is D, U, or a flexible direction based on configured and/or received target information.

If the network-side device indicates that a value corresponding to a symbol is 1, it indicates that the symbol is configured with an uplink sub-band or a downlink sub-band, or indicates that the symbol is configured with the uplink sub-band or downlink sub-band and a transmission direction of the symbol is uplink or downlink, or indicates that a transmission configuration of the symbol is determined according to sub-band full-duplex configuration information. wherein whether the symbol is configured with the uplink sub-band or the downlink sub-band may be determined based on the transmission direction of the symbol indicated by the target information.

In some embodiments, determining a transmission configuration of the first time unit according to the sub-band full-duplex configuration information may include at least one of the following:
1) if the sub-band full-duplex configuration information indicates that a transmission direction of the first time unit is uplink, the transmission direction of the first time unit is uplink;
2) if the sub-band full-duplex configuration information indicates that a transmission direction of the first time unit is downlink, the transmission direction of the first time unit is downlink;
3) if the sub-band full-duplex configuration information indicates that the first time unit is configured with a second sub-band, the first time unit is configured with the second sub-band, wherein the second sub-band is an uplink sub-band or a downlink sub-band. wherein whether the first time unit is configured with the uplink sub-band or the downlink sub-band may be determined based on a transmission direction of the first time unit indicated by target information.

Optionally, in a case where time-domain configuration information of a time unit is indicated by a predefined symbol, a manner in which the time-domain configuration information indicates a transmission configuration of the time unit includes at least one of the following:
(1) if the predefined symbol corresponding to a second time unit indicates uplink, the transmission direction of the second time unit is indicated as uplink; the predefined symbol used to indicate uplink may be U. For example, if the network-side device indicates that a symbol corresponding to a certain time unit is U, it indicates that a transmission direction of the symbol is uplink.
(2) if the predefined symbol corresponding to the second time unit indicates downlink, the transmission direction of the second time unit is indicated as downlink; the predefined symbol used to indicate downlink may be D. For example, if the network-side device indicates that a symbol corresponding to a certain time unit is D, it indicates that a transmission direction of the symbol is downlink.
(3) if the predefined symbol corresponding to the second time unit indicates a flexible direction, the transmission direction of the second time unit is indicated as the flexible direction; the predefined symbol used to indicate the flexible direction may be F. For example, if the network-side device indicates that a symbol corresponding to a certain time unit is F, it indicates that a transmission direction of the symbol is the flexible direction.
(4) if a predefined symbol corresponding to the second time unit is a first symbol, the second time unit is indicated to be configured with a third sub-band; or, the second time unit is indicated to be configured with the third sub-band and a transmission direction of the second time unit is opposite to a transmission direction indicated by target information; or, a transmission configuration of the second time unit is indicated to be determined according to sub-band full-duplex configuration information; wherein the first symbol is different from a symbol indicating uplink, a symbol indicating downlink, and a symbol indicating the flexible direction.

The first symbol may be predefined and different from a symbol indicating uplink (e.g., U), a symbol indicating downlink (e.g., D), and a symbol indicating the flexible direction (e.g., F). If the network-side device configures a symbol corresponding to a certain second time unit as the first symbol, it indicates that the second time unit is configured with an uplink sub-band or a downlink sub-band, or the second time unit is configured with the uplink sub-band or the downlink sub-band and the transmission direction of the time unit is uplink or downlink, or indicates that a transmission configuration of the second time unit is determined according to the sub-band full-duplex configuration information.

In some embodiments, determining a transmission configuration of the second time unit according to the sub-band full-duplex configuration information includes at least one of the following:
1) if the sub-band full-duplex configuration information indicates that a transmission direction of the second time unit is uplink, the transmission direction of the second time unit is uplink;
2) if the sub-band full-duplex configuration information indicates that a transmission direction of the second time unit is downlink, the transmission direction of the second time unit is downlink;
3) if the sub-band full-duplex configuration information indicates that the second time unit is configured with a fourth sub-band, the second time unit is configured with the fourth sub-band, wherein the fourth sub-band is an uplink sub-band or a downlink sub-band. Specifically, whether the second time unit is configured with the uplink sub-band or the downlink sub-band may be determined based on a transmission direction of the second time unit indicated by target information.

In this embodiment, for the time-domain configuration information received by the terminal, the network-side device may configure an uplink sub-band or configure an uplink sub-band and perform uplink transmission in a time unit for which the target information indicates downlink; configure a downlink sub-band or configure a downlink sub-band and perform downlink reception in a time unit for which the target information indicates uplink; configure an uplink sub-band, a downlink sub-band, configure the uplink sub-band and perform uplink transmission, or configure the downlink sub-band and perform downlink reception in a time unit for which the target information indicates a flexible direction.

Optionally, the method further includes: transmitting valid time information of the time-domain configuration information to the terminal.

In this embodiment, the valid time of the time-domain configuration information may be configured by RRC; or indicated by DCI format 2-0. For example, an SFI index may be a joint coding of the time-domain configuration information and the valid time.

In the embodiments of the present disclosure, the network-side device transmits the time-domain configuration information to the terminal. The time-domain configuration information may indicate whether a time unit is configured with an uplink sub-band or a downlink sub-band, or indicate a transmission direction of the time unit, thereby realizing dynamic indication of the transmission direction of the time unit.

The above embodiments describe the time-domain configuration information indication method of the present disclosure. The following embodiment further describes a corresponding device with reference to the accompanying drawings.

Specifically, as shown in FIG. 3, the embodiment of the present disclosure provides a time-domain configuration information indication device 300, which is applied to a terminal and includes:
a detection unit 310, configured to detect time-domain configuration information sent by a network-side device;
a determination unit 320, configured to, when the time-domain configuration information is detected, determine a transmission configuration of a time unit according to the time-domain configuration information;
wherein the transmission configuration includes at least one of the following:
   the time unit is configured with an uplink sub-band;
   the time unit is configured with a downlink sub-band;
   a transmission direction of the time unit.

In some embodiments, the time-domain configuration information is carried in predetermined downlink control information (DCI);
wherein the predetermined DCI includes at least one of the following:
a dedicated DCI format corresponding to the time-domain configuration information;
DCI format 2-0.

In some embodiments, the time-domain configuration information is used to indicate that a transmission direction of the time unit is a first transmission direction;
the first transmission direction is opposite to a second transmission direction of the time unit indicated by target information; or, the first transmission direction is the same as the second transmission direction of the time unit indicated by the target information.

In some embodiments, the time-domain configuration information is used to indicate that the time unit is configured with an uplink sub-band or indicate that the time unit is configured with a downlink sub-band;
wherein, if the target information indicates that the transmission direction of the time unit is uplink, the time-domain configuration information indicates that the time unit is configured with a downlink sub-band;
if the target information indicates that the transmission direction of the time unit is downlink, the time-domain configuration information indicates that the time unit is configured with an uplink sub-band.

In some embodiments, the time-domain configuration information is indicated in at least one of the following manners:
a predefined value;
   or,
a predefined symbol.

In some embodiments, in a case where the time-domain configuration information is indicated by the predefined value, the determination unit is specifically configured to perform at least one of the following:
if a value corresponding to a first time unit is a first value, a transmission direction of the first time unit is determined according to target information;
if a value corresponding to the first time unit is a second value, the following is determined: the first time unit is configured with a first sub-band; or, the first time unit is configured with the first sub-band and a transmission direction of the first time unit is opposite to a transmission direction indicated by the target information; or, a transmission configuration of the first time unit is determined according to sub-band full-duplex configuration information;
wherein the first sub-band is an uplink sub-band or a downlink sub-band.

In some embodiments, the determination unit is specifically configured to perform at least one of the following:
if the sub-band full-duplex configuration information indicates that a transmission direction of the first time unit is uplink, the transmission direction of the first time unit is determined to be uplink;
if the sub-band full-duplex configuration information indicates that the transmission direction of the first time unit is downlink, the transmission direction of the first time unit is determined to be downlink;
if the sub-band full-duplex configuration information indicates that the first time unit is configured with a second sub-band, the first time unit is determined to be configured with the second sub-band, wherein the second sub-band is an uplink sub-band or a downlink sub-band.

In some embodiments, in a case where the time-domain configuration information is indicated by the predefined symbol, the determination unit is specifically configured to perform at least one of the following:
if the predefined symbol corresponding to a second time unit indicates uplink, the transmission direction of the second time unit is determined to be uplink;
if the predefined symbol corresponding to the second time unit indicates downlink, the transmission direction of the second time unit is determined to be downlink;
if the predefined symbol corresponding to the second time unit indicates flexible, the transmission direction of the second time unit is determined to be flexible;
if the predefined symbol corresponding to the second time unit is a first symbol, the following is determined: the second time unit is configured with a third sub-band; or, the second time unit is configured with the third sub-band and the transmission direction of the second time unit is opposite to the transmission direction indicated by the target information, wherein the third sub-band is an uplink sub-band or a downlink sub-band; or, the transmission configuration of the second time unit is determined according to sub-band full-duplex configuration information;
wherein the first symbol is different from a symbol indicating uplink, a symbol indicating downlink, and a symbol indicating flexible.

In some embodiments, the determination unit is specifically configured to perform at least one of the following:
if the sub-band full-duplex configuration information indicates that the transmission direction of the second time unit is uplink, the transmission direction of the second time unit is determined to be uplink;
if the sub-band full-duplex configuration information indicates that the transmission direction of the second time unit is downlink, the transmission direction of the second time unit is determined to be downlink;
if the sub-band full-duplex configuration information indicates that the second time unit is configured with a fourth sub-band, the second time unit is determined to be configured with the fourth sub-band, wherein the fourth sub-band is an uplink sub-band or a downlink sub-band.

In some embodiments, the time-domain configuration information is used to indicate a transmission configuration of a time unit within one of the following time-domain ranges:
all slots;
a time-domain range indicated by radio resource control (RRC);
a predefined time-domain range;
a time-domain range corresponding to a flexible sub-band.

In some embodiments, the device further includes:
a first receiving unit, configured to receive valid time information of the time-domain configuration information sent by the network-side device;
the determination unit is specifically configured to: determine the transmission configuration of the time unit within the valid time according to the time-domain configuration information.

In some embodiments, the device further includes:
a processing unit, configured to, in a case where the terminal receives SFI-related information configured by the network-side device through RRC signaling and fails to detect the time-domain configuration information, perform a first process;
wherein the first process includes one of the following:
   not performing data transmission and data reception within the valid time of the time-domain configuration information;
   determining a transmission direction of the time unit according to target information;
   determining the transmission direction of the time unit according to first time-domain configuration information, wherein the first time-domain configuration information is time-domain configuration information previously received by the terminal before the time-domain configuration information;
   defaulting the transmission direction of the time unit within the valid time to a third transmission direction, wherein the third transmission direction is uplink transmission or downlink reception;
   determining whether to perform data transmission or data reception according to indication information.

In some embodiments, the processing unit is specifically configured to perform at least one of the following:
if the indication information indicates a third value, stopping data reception in a third time unit, wherein the third time unit is a time unit for which the target information indicates downlink reception, or the third time unit is a time unit for which both the target information and the first time-domain configuration information indicate downlink reception;
if the indication information indicates a fourth value, stopping data transmission in a fourth time unit, wherein the fourth time unit is a time unit for which the target information indicates uplink transmission, or the fourth time unit is a time unit for which both the target information and the first time-domain configuration information indicate uplink transmission.

In some embodiments, the target information includes part or all of the following information:
uplink and downlink common configuration information;
uplink and downlink dedicated configuration information;
SFI in DCI format 2-0.
it should be noted that the above device provided in the embodiment of the present disclosure can implement all the method steps of the method embodiment applied to the terminal and can achieve the same technical effects; details of the parts and beneficial effects that are the same as those of the method embodiments are not repeated herein.

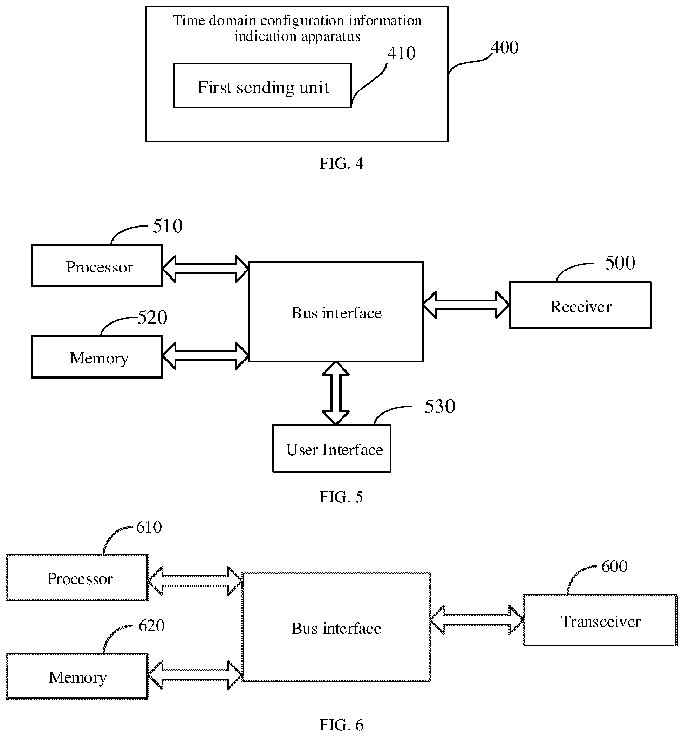

Specifically, as shown in FIG. 4, an embodiment of the present disclosure provides a time-domain configuration information indication device 400, which is applied to a network-side device and includes:
a first sending unit 410, configured to send time-domain configuration information to a terminal, wherein the time-domain configuration information is used to indicate a transmission configuration of a time unit;
wherein the transmission configuration includes at least one of the following:
   the time unit is configured with an uplink sub-band;
   the time unit is configured with a downlink sub-band;
   the transmission direction of the time unit.
   in some embodiments, the time-domain configuration information is carried in a predefined DCI;
   wherein the predefined DCI includes at least one of the following:
      a dedicated DCI format corresponding to the time-domain configuration information;
      DCI format 2-0.
      in some embodiments, the time-domain configuration information is used to indicate that the transmission direction of the time unit is a first transmission direction;
      the first transmission direction is opposite to a second transmission direction of the time unit indicated by the target information; or, the first transmission direction is the same as the second transmission direction of the time unit indicated by the target information.

In some embodiments, the time-domain configuration information is used to indicate that the time unit is configured with an uplink sub-band or to indicate that the time unit is configured with a downlink sub-band;
wherein, if the target information indicates that the transmission direction of the time unit is uplink, the time-domain configuration information indicates that the time unit is configured with a downlink sub-band;
if the target information indicates that the transmission direction of the time unit is downlink, the time-domain configuration information indicates that the time unit is configured with an uplink sub-band.
in some embodiments, the time-domain configuration information is indicated by at least one of the following:
   a predefined numerical value;
      or,
   a predefined symbol.

In some embodiments, in a case where the time-domain configuration information is indicated by the predefined numerical value, the manner in which the time-domain configuration information indicates the transmission configuration of the time unit includes at least one of the following:
if the numerical value corresponding to a first time unit is a first value, the transmission direction of the first time unit is indicated to be determined according to the target information;
if the numerical value corresponding to the first time unit is a second value, the following is indicated: the first time unit is configured with a first sub-band; or, the first time unit is configured with the first sub-band and the transmission direction of the first time unit is opposite to the transmission direction indicated by the target information; or, the transmission configuration of the first time unit is determined according to sub-band full-duplex configuration information;
wherein the first sub-band is an uplink sub-band or a downlink sub-band.
in some embodiments, in a case where the time-domain configuration information of the time unit is indicated by the predefined symbol, the manner in which the time-domain configuration information indicates the transmission configuration of the time unit includes at least one of the following:
   if the predefined symbol corresponding to a second time unit indicates uplink, the transmission direction of the second time unit is indicated to be uplink;
   if the predefined symbol corresponding to the second time unit indicates downlink, the transmission direction of the second time unit is indicated to be downlink;
   if the predefined symbol corresponding to the second time unit indicates flexible, the transmission direction of the second time unit is indicated to be flexible;
   if the predefined symbol corresponding to the second time unit is a first symbol, the following is indicated: the second time unit is configured with a third sub-band; or, the second time unit is configured with the third sub-band and the transmission direction of the second time unit is opposite to the transmission direction indicated by the target information; or, the transmission configuration of the second time unit is determined according to sub-band full-duplex configuration information.
   wherein the first symbol is different from the symbol indicating uplink, the symbol indicating downlink, and the symbol indicating flexible direction.

In some embodiments, the time-domain configuration information indicates a transmission configuration value of the time unit within one of the following time-domain ranges:
all slots;
a time-domain range indicated by RRC;
a predefined time-domain range;
a time-domain range corresponding to a flexible sub-band.

In some embodiments, the device further includes:
a second sending unit, configured to send effective time information of the time-domain configuration information to the terminal.

In some embodiments, the target information includes part or all of the following information:
uplink and downlink common configuration information;
uplink and downlink dedicated configuration information;
SFI in DCI format 2-0.

It should be noted that the above device provided in the embodiment of the present disclosure can implement all the method steps of the method embodiments applied to the network-side device and can achieve the same technical effects; details of the parts and beneficial effects that are the same as those of the method embodiments are not repeated herein.

It should be noted that the division of units in the embodiments of the present disclosure is illustrative and only represents a logical functional division; other division methods may be adopted in actual implementation. In addition, the functional units in each embodiment of the present disclosure may be integrated into one processing unit, may exist separately in physical form, or may be integrated into one unit by two or more units. The integrated units may be implemented in hardware form or in software function unit form.

If the integrated unit is implemented in the form of a software function unit and is sold or used as an independent product, it may be stored in a processor-readable storage medium. Based on this understanding, the technical solutions of the present disclosure, in essence or the parts contributing to the related art, or all or part of the technical solutions, may be embodied as a software product. The computer software product is stored in a storage medium and includes several instructions to make a computer device (which may be a personal computer, server, or network device, etc.) or a processor execute all or part of the steps of the methods described in various embodiments of the present disclosure. The storage medium mentioned above includes: USB flash drives, mobile hard disks, Read-Only Memory (ROM), Random Access Memory (RAM), magnetic disks, optical disks, and other media capable of storing program code]

As shown in FIG. 5, the embodiment of the present disclosure further provides a terminal, including: a memory 520, a transceiver 500, and a processor 510; wherein the memory 520 is configured to store a computer program; the transceiver 500 is configured to receive and transmit data under the control of the processor 510; the processor 510 is configured to read the computer program in the memory and perform the following operations:
detecting time-domain configuration information sent by a network-side device;
upon detecting the time-domain configuration information, determining a transmission configuration of a time unit based on the time-domain configuration information;
wherein the transmission configuration includes at least one of the following:
   the time unit is configured with an uplink sub-band;
   the time unit is configured with a downlink sub-band;
   the transmission direction of the time unit.

In some embodiments, the time-domain configuration information is carried in predetermined Downlink Control Information (DCI);
wherein the predetermined DCI includes at least one of the following:
a dedicated DCI format corresponding to the time-domain configuration information;
DCI format 2-0.

In some embodiments, the time-domain configuration information is used to indicate that the transmission direction of the time unit is a first transmission direction;
the first transmission direction is opposite to a second transmission direction of the time unit indicated by the target information; or, the first transmission direction is the same as the second transmission direction of the time unit indicated by the target information.

In some embodiments, the time-domain configuration information is used to indicate that the time unit is configured with an uplink sub-band or to indicate that the time unit is configured with a downlink sub-band;
wherein, if the target information indicates that the transmission direction of the time unit is uplink, the time-domain configuration information indicates that the time unit is configured with a downlink sub-band;
if the target information indicates that the transmission direction of the time unit is downlink, the time-domain configuration information indicates that the time unit is configured with an uplink sub-band.

In some embodiments, the time-domain configuration information is indicated in at least one of the following manners:
a predefined value;
   or,
a predefined symbol.

In some embodiments, when the time-domain configuration information is indicated by a predefined value, the processor is configured to read the computer program stored in the memory and perform at least one of the following operations:
if a value corresponding to a first time unit is a first value, determining a transmission direction of the first time unit according to target information;
if a value corresponding to the first time unit is a second value, then: determining that the first time unit is configured with a first sub-band; or, determining that the first time unit is configured with the first sub-band and a transmission direction of the first time unit is opposite to a transmission direction indicated by the target information; or, determining a transmission configuration of the first time unit based on sub-band full duplex configuration information;
wherein the first sub-band is an uplink sub-band or a downlink sub-band.

In some embodiments, the processor is configured to read the computer program stored in the memory and perform at least one of the following operations:
if the sub-band full duplex configuration information indicates that the transmission direction of the first time unit is uplink, determining that the transmission direction of the first time unit is uplink;
if the sub-band full duplex configuration information indicates that the transmission direction of the first time unit is downlink, determining that the transmission direction of the first time unit is downlink;
if the sub-band full duplex configuration information indicates that the first time unit is configured with a second sub-band, determining that the first time unit is configured with the second sub-band, wherein the second sub-band is an uplink sub-band or a downlink sub-band.

In some embodiments, when the time-domain configuration information is indicated by a predefined symbol, the processor is configured to read the computer program stored in the memory and perform at least one of the following operations:
if a predefined symbol corresponding to a second time unit indicates uplink, determining that a transmission direction of the second time unit is uplink;
if the predefined symbol corresponding to the second time unit indicates downlink, determining that the transmission direction of the second time unit is downlink;
if the predefined symbol corresponding to the second time unit indicates flexible, determining that the transmission direction of the second time unit is flexible;
if the predefined symbol corresponding to the second time unit is a first symbol, then: determining that the second time unit is configured with a third sub-band; or, determining that the second time unit is configured with the third sub-band and a transmission direction of the second time unit is opposite to a transmission direction indicated by the target information, wherein the third sub-band is an uplink sub-band or a downlink sub-band; or, determining a transmission configuration of the second time unit based on sub-band full duplex configuration information;
wherein the first symbol is different from the symbol indicating uplink, the symbol indicating downlink, and the symbol indicating flexible.

In some embodiments, the processor is configured to read the computer program stored in the memory and perform at least one of the following operations:
if the sub-band full duplex configuration information indicates that the transmission direction of the second time unit is uplink, determining that the transmission direction of the second time unit is uplink;
if the sub-band full duplex configuration information indicates that the transmission direction of the second time unit is downlink, determining that the transmission direction of the second time unit is downlink;
if the sub-band full duplex configuration information indicates that the second time unit is configured with a fourth sub-band, determining that the second time unit is configured with the fourth sub-band, wherein the fourth sub-band is an uplink sub-band or a downlink sub-band.

In some embodiments, the time-domain configuration information indicates a transmission configuration of a time unit within one of the following time-domain ranges:
all slots;
a time-domain range indicated by RRC;
a predefined time-domain range;
a time-domain range corresponding to a flexible sub-band.

In some embodiments, the processor is configured to read the computer program stored in the memory and perform the following operation:
receiving effective time information of the time-domain configuration information sent by the network-side device;
determining a transmission configuration of the time unit within the effective time based on the time-domain configuration information.

In some embodiments, the processor is configured to read the computer program stored in the memory and perform the following operation:
performing a first process in a case where the terminal receives SFI-related information configured by a network-side device via RRC signaling and fails to detect the time-domain configuration information;
wherein the first process comprises one of the following:
   not performing data transmission and data reception within the effective time of the time-domain configuration information;
   determining a transmission direction of the time unit based on target information;
   determining a transmission direction of the time unit based on first time-domain configuration information, wherein the first time-domain configuration information is a previously received time-domain configuration information before the current time-domain configuration information;
   by default, setting the transmission direction of the time unit within the effective time as a third transmission direction, wherein the third transmission direction is uplink transmission or downlink reception;
   determining whether to perform data transmission or data reception based on indication information.

In some embodiments, the processor is configured to read the computer program stored in the memory and perform at least one of the following operations:
if the indication information indicates a third value, stopping data reception on a third time unit, wherein the third time unit is a time unit indicated by the target information as for downlink reception, or the third time unit is a time unit indicated by both the target information and the first time-domain configuration information as for downlink reception;
if the indication information indicates a fourth value, stopping data transmission on a fourth time unit, wherein the fourth time unit is a time unit indicated by the target information as for uplink transmission, or the fourth time unit is a time unit indicated by both the target information and the first time-domain configuration information as for uplink transmission.

In some embodiments, the target information comprises part or all of the following information:
uplink and downlink common configuration information;
uplink and downlink dedicated configuration information;
SFI in DCI format 2-0.

It should be noted that in FIG. 5, the bus architecture may include any number of interconnected buses and bridges, specifically linking various circuits such as one or more processors represented by processor 510 and memory represented by memory 520. The bus architecture may also connect various other circuits such as peripherals, voltage regulators, and power management circuits, which are well-known in the art and thus not described further herein. The bus interface provides interfaces. The transceiver 500 may comprise multiple components, namely, a transmitter and a transceiver, providing units for communicating with various other devices over a transmission medium. For different user equipment, the user interface 530 may also be an interface capable of internally or externally connecting required devices, including but not limited to a keypad, display, speaker, microphone, joystick, and so on.

Processor 510 is responsible for managing the bus architecture and general processing, and memory 520 can store data used by processor 510 during operation.

In some embodiments, processor 510 may be a Central Processing Unit (CPU), Application-Specific Integrated Circuit (ASIC), Field-Programmable Gate Array (FPGA), or Complex Programmable Logic Device (CPLD); the processor may also adopt a multi-core architecture.

The processor is configured to execute any method provided in the embodiments of the present disclosure according to executable instructions obtained by calling the computer program stored in the memory. The processor and memory may also be physically arranged separately.

It should be noted that the above-described apparatus provided in the embodiments of the present disclosure is capable of implementing all method steps realized by the method embodiments applied to the terminal, and can achieve the same technical effects. Therefore, the parts and beneficial effects that are the same as those in the method embodiments are not described repeatedly herein.

As shown in FIG. 6, an embodiment of the present disclosure further provides a network-side device, including: a memory 620, a transceiver 600, and a processor 610; wherein the memory 620 is configured to store a computer program; the transceiver 600 is configured to receive and transmit data under the control of the processor 610; the processor 610 is configured to read the computer program stored in the memory and perform the following operation:
transmitting time-domain configuration information to the terminal, wherein the time-domain configuration information is used for indicating a transmission configuration of a time unit;
wherein the transmission configuration includes at least one of the following:
   the time unit is configured with an uplink sub-band;
   the time unit is configured with a downlink sub-band;
   the transmission direction of the time unit.

In some embodiments, the time-domain configuration information is carried in a predefined DCI;
wherein the predefined DCI comprises at least one of the following:
a dedicated DCI format corresponding to the time-domain configuration information;
DCI format 2-0.

In some embodiments, the time-domain configuration information is used to indicate that the transmission direction of the time unit is a first transmission direction;
the first transmission direction is opposite to a second transmission direction of the time unit indicated by target information; or the first transmission direction is the same as the second transmission direction of the time unit indicated by the target information.

In some embodiments, the time-domain configuration information is used to indicate that the time unit is configured with an uplink sub-band or indicate that the time unit is configured with a downlink sub-band;
wherein, if the target information indicates that the transmission direction of the time unit is uplink, then the time-domain configuration information indicates that the time unit is configured with a downlink sub-band;
if the target information indicates that the transmission direction of the time unit is downlink, then the time-domain configuration information indicates that the time unit is configured with an uplink sub-band.

In some embodiments, the time-domain configuration information is indicated in at least one of the following ways:
indication by a predefined value;
   or,
indication by a predefined symbol.

In some embodiments, in the case of indicating the time-domain configuration information by a predefined value, the processor is configured to read the computer program stored in the memory and perform at least one of the following operations:
if the value corresponding to a first time unit is a first value, indicating that the transmission direction of the first time unit is determined based on target information;
if the value corresponding to the first time unit is a second value, then: indicating that the first time unit is configured with a first sub-band; or indicating that the first time unit is configured with the first sub-band and the transmission direction of the first time unit is opposite to the transmission direction indicated by the target information; or indicating that the transmission configuration of the first time unit is determined according to sub-band full duplex configuration information;
wherein, the first sub-band is an uplink sub-band or a downlink sub-band.

In some embodiments, in the case of indicating the time-domain configuration information of a time unit by a predefined symbol, the processor is configured to read the computer program stored in the memory and perform at least one of the following operations:
if the predefined symbol corresponding to a second time unit indicates uplink, then indicating that the transmission direction of the second time unit is uplink;
if the predefined symbol corresponding to the second time unit indicates downlink, then indicating that the transmission direction of the second time unit is downlink;
if the predefined symbol corresponding to the second time unit indicates flexible, then indicating that the transmission direction of the second time unit is a flexible direction;
if the predefined symbol corresponding to the second time unit is a first symbol, then: indicating that the second time unit is configured with a third sub-band; or indicating that the second time unit is configured with the third sub-band and the transmission direction of the second time unit is opposite to the transmission direction indicated by the target information; or indicating that the transmission configuration of the second time unit is determined based on sub-band full duplex configuration information;
wherein, the first symbol is different from the symbols indicating uplink, downlink, and flexible.

In some embodiments, the time-domain configuration information indicates a transmission configuration value of time units within one of the following time-domain ranges:
all slots;
a time-domain range indicated by RRC;
a predefined time-domain range;
a time-domain range corresponding to a flexible sub-band.

In some embodiments, the processor is configured to read the computer program stored in the memory and perform the following operation:
transmitting effective time information of the time-domain configuration information to the terminal.

In some embodiments, the target information comprises part or all of the following information:
uplink and downlink common configuration information;
uplink and downlink dedicated configuration information;
the SFI in DCI format 2-0.

Wherein, as shown in FIG. 6, a bus architecture may include any number of interconnected buses and bridges, in which various circuits represented by one or more processors represented by the processor 610 and a memory represented by the memory 620 are linked together. The bus architecture may also link various other circuits such as peripheral devices, regulators, and power management circuits, which are known in the art and will not be further described herein. A bus interface is provided. The transceiver 600 may comprise multiple elements, i.e., including a transmitter and transceiver, and provides units for communication with various other devices over a transmission medium. The processor 610 is responsible for managing the bus architecture and general processing, and the memory 620 may store data used by the processor 610 in performing operations.

The processor 610 may be a Central Processing Unit (CPU), an Application Specific Integrated Circuit (ASIC), a Field-Programmable Gate Array (FPGA), or a Complex Programmable Logic Device (CPLD); the processor may also adopt a multi-core architecture.

It should be noted that the above-described apparatus provided in the embodiments of the present disclosure is capable of implementing all the method steps realized by the method embodiments applied to the network-side device and can achieve the same technical effects. Therefore, the parts that are the same as those in the method embodiments and the beneficial effects thereof will not be described again herein.

In addition, a specific embodiment of the present disclosure further provides a processor-readable storage medium, on which a computer program is stored, wherein the program, when executed by the processor, implements the steps of the above time-domain configuration information indication method and can achieve the same technical effects. To avoid repetition, the description is omitted here. The readable storage medium may be any accessible medium or data storage device accessible by the processor, including but not limited to magnetic storage (e.g., floppy disks, hard disks, magnetic tapes, magneto-optical disks (MO)), optical storage (e.g., CDs, DVDs, BDs, HVDs), and semiconductor storage (e.g., ROM, EPROM, EEPROM, non-volatile memory (NAND FLASH), solid-state drives (SSDs)), etc.

It should be noted that the technical solutions provided in the embodiments of the present disclosure can be applied to various systems, especially the 5th Generation mobile communication technology (5G) systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), LTE-Advanced (LTE-A), Universal Mobile Telecommunication System (UMTS), Worldwide Interoperability for Microwave Access (WiMAX), and 5G New Radio (NR) systems. All these systems include terminal devices and network devices. The system may further include a core network part, such as the Evolved Packet System (EPS), and the 5G System (5GS), etc.

The terminal device involved in the embodiments of the present disclosure may refer to a device that provides users with voice and/or data connectivity, such as handheld devices with wireless connection functions or other processing devices connected to wireless modems. In different systems, the name of the terminal device may vary; for example, in 5G systems, the terminal device may be referred to as User Equipment (UE). The wireless terminal device may communicate with one or more Core Networks (CN) through a Radio Access Network (RAN). The wireless terminal device may be a mobile terminal device, such as a mobile phone (also referred to as a "cellular" phone), and a computer with a mobile terminal device, such as a portable, pocket-sized, handheld, computer-integrated, or vehicle-mounted mobile device, which exchanges voice and/or data with the RAN. For example, Personal Communication Service (PCS) phones, cordless phones, Session Initiated Protocol (SIP) phones, Wireless Local Loop (WLL) stations, Personal Digital Assistants (PDAs), etc. The wireless terminal device may also be referred to as a system, subscriber unit, subscriber station, mobile station, mobile terminal, remote station, access point, remote terminal device, access terminal device, user terminal device, user agent, or user device; these terms are not limited in the embodiments of the present disclosure.

The network-side device involved in the embodiments of the present disclosure may be a base station, which may include multiple cells serving the terminals. Depending on the specific application scenario, the base station may also be referred to as an access point, or a device in the access network that communicates with the wireless terminal device via one or more sectors over the air interface, or by other names. The network device may be used to interchange received air frames and Internet Protocol (IP) packets and serve as a router between the wireless terminal device and the rest of the access network, wherein the rest of the access network may include an IP communication network. The network device may also coordinate management of air interface properties. For example, the network device involved in the embodiments of the present disclosure may be a Base Transceiver Station (BTS) in GSM or CDMA, a Node B in WCDMA, an evolved Node B (eNB) in LTE, or a 5G base station (gNB) in a next-generation 5G architecture. It may also be a Home evolved Node B (HeNB), relay node, femto base station, pico base station, etc.; these are not limited in the embodiments of the present disclosure. In some network architectures, the network device may include a Centralized Unit (CU) node and a Distributed Unit (DU) node, which may be physically arranged separately.

MIMO (Multi Input Multi Output) transmission may be performed between the network device and the terminal device respectively by using one or more antennas; the MIMO transmission may be Single User MIMO (SU-MIMO) or Multi User MIMO (MU-MIMO). Depending on the structure and number of root antenna combinations, the MIMO transmission may be 2 Dimensions MIMO (2D-MIMO), 3 Dimensions MIMO (3D-MIMO), Full Dimension MIMO (FD-MIMO), or massive-MIMO, and may also be diversity transmission, precoding transmission, or beamforming transmission.

It should be understood by those skilled in the art that the embodiments of the present disclosure may be provided as a method, a system, or a computer program product. Therefore, the present disclosure may be implemented in the form of a complete hardware embodiment, a complete software embodiment, or an embodiment combining software and hardware. Moreover, the present disclosure may take the form of a computer program product implemented on one or more computer-usable storage media containing computer-usable program code (including but not limited to magnetic storage and optical storage, etc.).

The present disclosure has been described with reference to the flowcharts and/or block diagrams of methods, devices (systems), and computer program products according to embodiments of the present disclosure. It should be understood that each process and/or block in the flowcharts and/or block diagrams can be implemented by computer-executable instructions, and the combinations of processes and/or blocks in the flowcharts and/or block diagrams can also be implemented by computer-executable instructions. These computer-executable instructions can be provided to a general-purpose computer, a special-purpose computer, an embedded processor, or other programmable data processing equipment processor to produce a machine, such that the instructions executed by the processor of the computer or other programmable data processing equipment generate a device for implementing the functions specified in one or more of the processes in the flowchart and/or one or more blocks in the block diagram.

These processor-executable instructions can also be stored in a processor-readable memory that can direct a computer or other programmable data processing device to work in a specific manner, such that the instructions stored in the processor-readable memory produce an article of manufacture that includes instruction means for performing the functions specified in one or more of the processes in the flowchart and/or one or more blocks in the block diagram.

These processor-executable instructions can also be loaded onto a computer or other programmable data processing device so that a series of operational steps is performed on the computer or other programmable device to produce a computer-implemented process, thereby causing the instructions executed on the computer or other programmable device to implement the steps for executing the functions specified in one or more of the processes in the flowchart and/or one or more blocks in the block diagram.

It should be noted that the division of each module described above is only a logical functional division; in actual implementation, it may be entirely or partially integrated into one physical entity, or physically separated. These modules may all be implemented in the form of software called by processing elements; they may also be implemented entirely in hardware; or some modules may be implemented in the form of software called by processing elements, while others are implemented in hardware. For example, one module may be implemented as a separately established processing element, or may be integrated in one of the chips of the above device. In addition, it may also be stored in the memory of the above device in the form of program code and be called and executed by one of the processing elements of the above device to perform the functions of the determined module. Other modules may be implemented in a similar manner. Furthermore, all or some of these modules may be integrated or independently implemented. The processing element described herein may be an integrated circuit with signal processing capabilities. During the implementation, each step of the above method or each module described above may be implemented through hardware integrated logic circuits or instructions in software form in the processor element.

For example, each module, unit, subunit, or submodule may be one or more integrated circuits configured to implement the above method, such as: one or more Application Specific Integrated Circuits (ASICs), or one or more Digital Signal Processors (DSPs), or one or more Field Programmable Gate Arrays (FPGAs). Further, when one of the above modules is implemented in the form of program code scheduled by a processing element, the processing element may be a general-purpose processor, such as a Central Processing Unit (CPU) or another processor capable of invoking program code. Additionally, these modules may be integrated together and implemented in the form of a System-On-a-Chip (SoC).

The terms "first", "second", etc., in the specification and claims of the present disclosure are used to distinguish similar objects, rather than to describe a specific order or sequence. It should be understood that such usage is interchangeable under appropriate circumstances, for example, embodiments of the present disclosure described herein can be practiced in sequences other than those illustrated or described herein. Furthermore, the terms "comprise" and "have", and any variations thereof, are intended to cover non-exclusive inclusion. For example, a process, method, system, product, or device that comprises a list of steps or elements is not necessarily limited to those explicitly listed steps or elements, but may also include other steps or elements not explicitly listed or inherent to such process, method, product, or device. Additionally, the use of "and/or" in the specification and claims indicates at least one of the connected objects. For example, "A and/or B and/or C" means any one of A alone, B alone, C alone, both A and B, both B and C, both A and C, and all of A, B, and C. Similarly, "at least one of A and B" as used in the specification and claims should be understood as "A alone, B alone, or both A and B."

It is evident that those skilled in the art can make various modifications and variations to the present disclosure without departing from the spirit and scope of the present disclosure. Therefore, if such modifications and variations fall within the scope of the claims of the present disclosure and their equivalents, the present disclosure is intended to encompass such modifications and variations.

## Claims

1. A method for indicating time domain configuration information, applied to a terminal, comprising:
detecting time domain configuration information transmitted by a network-side device;
determining a transmission configuration of a time unit based on the time domain configuration information in response to detecting the time domain configuration information;
wherein the transmission configuration comprises at least one of the following:
the time unit is configured with an uplink subband;
the time unit is configured with a downlink subband;
a transmission direction of the time unit.

2. The method according to claim 1, wherein the time domain configuration information is carried in a predetermined downlink control information (DCI);
wherein the predetermined DCI comprises at least one of the following:
a dedicated DCI format corresponding to the time domain configuration information;
DCI format 2-0.

3. The method according to claim 1, wherein the time domain configuration information is used to indicate that the transmission direction of the time unit is a first transmission direction;
wherein the first transmission direction is opposite to a second transmission direction of the time unit indicated by target information; or the first transmission direction is the same as the second transmission direction of the time unit indicated by the target information.

4. The method according to claim 1, wherein the time domain configuration information is used to indicate that the time unit is configured with an uplink subband or the time unit is configured with a downlink subband;
wherein, when the target information indicates that the transmission direction of the time unit is uplink, the time domain configuration information indicates that the time unit is configured with a downlink subband;
when the target information indicates that the transmission direction of the time unit is downlink, the time domain configuration information indicates that the time unit is configured with an uplink subband.

5. The method according to claim 1, wherein the time domain configuration information is indicated by at least one of the following:
a predefined value;
or,
a predefined symbol.

6. The method according to claim 5, wherein when the time domain configuration information is indicated by a predefined value, determining the transmission configuration of the time unit based on the time domain configuration information comprises at least one of the following:
when a value corresponding to a first time unit is a first value, determining a transmission direction of the first time unit according to target information;
when the value corresponding to the first time unit is a second value: determining that the first time unit is configured with a first subband; or determining that the first time unit is configured with the first subband and that the transmission direction of the first time unit is opposite to a transmission direction indicated by the target information; or determining a transmission configuration of the first time unit based on full-duplex subband configuration information;
wherein the first subband is an uplink subband or a downlink subband.

7. The method according to claim 6, wherein determining the transmission configuration of the first time unit based on the full-duplex subband configuration information comprises at least one of the following:
when the full-duplex subband configuration information indicates that the transmission direction of the first time unit is uplink, determining that the transmission direction of the first time unit is uplink;
when the full-duplex subband configuration information indicates that the transmission direction of the first time unit is downlink, determining that the transmission direction of the first time unit is downlink;
when the full-duplex subband configuration information indicates that the first time unit is configured with a second subband, determining that the first time unit is configured with the second subband, wherein the second subband is an uplink subband or a downlink subband.

8. The method according to claim 5, wherein when the time domain configuration information is indicated by a predefined symbol, determining the transmission configuration of the time unit based on the time domain configuration information comprises at least one of the following:
when a predefined symbol corresponding to a second time unit indicates uplink, determining that a transmission direction of the second time unit is uplink;
when the predefined symbol corresponding to the second time unit indicates downlink, determining that a transmission direction of the second time unit is downlink;
when the predefined symbol corresponding to the second time unit indicates a flexible direction, determining that the transmission direction of the second time unit is a flexible direction;
when the predefined symbol corresponding to the second time unit is a first symbol: determining that the second time unit is configured with a third subband; or determining that the second time unit is configured with the third subband and the transmission direction of the second time unit is opposite to a transmission direction indicated by target information, wherein the third subband is an uplink subband or a downlink subband; or determining a transmission configuration of the second time unit based on full-duplex subband configuration information;
wherein the first symbol is different from a symbol indicating uplink, a symbol indicating downlink, and a symbol indicating a flexible direction.

9. The method according to claim 8, wherein determining the transmission configuration of the second time unit based on the full-duplex subband configuration information comprises at least one of the following:
when the full-duplex subband configuration information indicates that a transmission direction of the second time unit is uplink, determining that the transmission direction of the second time unit is uplink;
when the full-duplex subband configuration information indicates that the transmission direction of the second time unit is downlink, determining that the transmission direction of the second time unit is downlink;
when the full-duplex subband configuration information indicates that the second time unit is configured with a fourth subband, determining that the second time unit is configured with the fourth subband, wherein the fourth subband is an uplink subband or a downlink subband.

10. The method according to claim 1, wherein the time domain configuration information indicates a transmission configuration of a time unit within one of the following time domain ranges:
all slots;
a time domain range indicated by radio resource control (RRC);
a predefined time domain range;
a time domain range corresponding to a flexible subband.

11. The method according to claim 1, further comprising:
receiving, by the terminal, valid time information of the time domain configuration information transmitted by the network-side device;
wherein determining the transmission configuration of the time unit based on the time domain configuration information comprises:
determining, based on the time domain configuration information, a transmission configuration of the time unit within the valid time.

12. The method according to claim 1, further comprising:
executing, by the terminal, first processing when the terminal receives slot format indication (SFI) related information configured by the network-side device through RRC signaling and fails to detect the time domain configuration information;
wherein the first processing comprises one of the following:
not performing data transmission and data reception within a valid time of the time domain configuration information;
determining a transmission direction of the time unit according to target information;
determining the transmission direction of the time unit according to first time domain configuration information, wherein the first time domain configuration information is time domain configuration information last received by the terminal prior to the time domain configuration information;
setting a default transmission direction of the time unit within the valid time to be a third transmission direction, wherein the third transmission direction is uplink transmission or downlink reception;
determining whether to perform data transmission or data reception according to indication information.

13. The method according to claim 12, wherein determining whether to perform data transmission or data reception according to the indication information comprises at least one of the following:
when the indication information indicates a third value, stopping data reception on a third time unit, wherein the third time unit is a time unit indicated by the target information as for downlink reception, or the third time unit is a time unit indicated by both the target information and the first time domain configuration information as for downlink reception;
when the indication information indicates a fourth value, stopping data transmission on a fourth time unit, wherein the fourth time unit is a time unit indicated by the target information as for uplink transmission, or the fourth time unit is a time unit indicated by both the target information and the first time domain configuration information as for uplink transmission.

14. The method according to claim 3, 4, 12, or 13, wherein the target information comprises part or all of the following information:
uplink and downlink common configuration information;
uplink and downlink dedicated configuration information;
slot format indication (SFI) in DCI format 2-0.

15. A method for indicating time domain configuration information, applied to a network-side device, comprising:
transmitting, by the network-side device, time domain configuration information to a terminal, wherein the time domain configuration information is used to indicate a transmission configuration of a time unit;
wherein the transmission configuration comprises at least one of the following:
the time unit is configured with an uplink subband;
the time unit is configured with a downlink subband;
a transmission direction of the time unit.

16. The method according to claim 15, wherein the time domain configuration information is carried in a predetermined DCI;
wherein the predetermined DCI comprises at least one of the following:
a dedicated DCI format corresponding to the time domain configuration information;
DCI format 2-0.

17. The method according to claim 15, wherein the time domain configuration information is used to indicate that a transmission direction of the time unit is a first transmission direction;
wherein the first transmission direction is opposite to a second transmission direction of the time unit indicated by target information; or the first transmission direction is the same as the second transmission direction of the time unit indicated by the target information.

18. The method according to claim 15, wherein the time domain configuration information is used to indicate that the time unit is configured with an uplink subband or indicate that the time unit is configured with a downlink subband;
wherein when the target information indicates that the transmission direction of the time unit is uplink, the time domain configuration information indicates that the time unit is configured with a downlink subband;
when the target information indicates that the transmission direction of the time unit is downlink, the time domain configuration information indicates that the time unit is configured with an uplink subband.

19. The method according to claim 15, wherein the time domain configuration information is indicated by at least one of the following:
a predefined value indication; or
a predefined symbol.

20. The method according to claim 19, wherein when the time domain configuration information is indicated by a predefined value, a manner in which the time domain configuration information indicates a transmission configuration of a time unit comprises at least one of the following:
when a value corresponding to a first time unit is a first value, indicating that a transmission direction of the first time unit is determined according to target information;
when the value corresponding to the first time unit is a second value, indicating that the first time unit is configured with a first subband; or indicating that the first time unit is configured with the first subband and the transmission direction of the first time unit is opposite to a transmission direction indicated by the target information; or indicating that the transmission configuration of the first time unit is determined according to configuration information of subband full duplex,
wherein the first subband is an uplink subband or a downlink subband.

21. The method according to claim 19, wherein when the time domain configuration information is indicated by a predefined symbol, a manner in which the time domain configuration information indicates a transmission configuration of a time unit comprises at least one of the following:
when a predefined symbol corresponding to a second time unit indicates uplink, indicating that a transmission direction of the second time unit is uplink;
when the predefined symbol corresponding to the second time unit indicates downlink, indicating that the transmission direction of the second time unit is downlink;
when the predefined symbol corresponding to the second time unit indicates flexibility, indicating that the transmission direction of the second time unit is a flexible direction;
when the predefined symbol corresponding to the second time unit is a first symbol, indicating that the second time unit is configured with a third subband; or indicating that the second time unit is configured with the third subband and the transmission direction of the second time unit is opposite to a transmission direction indicated by the target information; or indicating that the transmission configuration of the second time unit is determined according to configuration information of subband full duplex,
wherein the first symbol is different from a symbol indicating uplink, a symbol indicating downlink, and a symbol indicating flexibility.

22. The method according to claim 15, wherein the time domain configuration information indicates a transmission configuration value of time units within one of the following time domain ranges:
all slots;
a time domain range indicated by RRC;
a predefined time domain range;
a time domain range corresponding to a flexible subband.

23. The method according to claim 15, further comprising:
transmitting, to a terminal, valid time information of the time domain configuration information.

24. The method according to claim 17, 18, 20, or 21, wherein the target information comprises part or all of the following information:
uplink and downlink common configuration information;
uplink and downlink dedicated configuration information;
slot format indication (SFI) in DCI format 2-0.

25. A terminal, comprising: a memory, a transceiver, and a processor;
the memory configured to store a computer program;
the transceiver configured to receive and transmit data under control of the processor;
the processor configured to read the computer program in the memory and perform the following operations:
detecting time domain configuration information transmitted by a network-side device;
when the time domain configuration information is detected, determining a transmission configuration of a time unit according to the time domain configuration information;
wherein the transmission configuration comprises at least one of the following:
the time unit is configured with an uplink subband;
the time unit is configured with a downlink subband;
a transmission direction of the time unit.

26. The terminal according to claim 25, wherein the time domain configuration information is carried in predetermined downlink control information (DCI);
wherein the predetermined DCI comprises at least one of the following:
a dedicated DCI format corresponding to the time domain configuration information;
DCI format 2-0.

27. The terminal according to claim 25, wherein the time domain configuration information is used to indicate that a transmission direction of the time unit is a first transmission direction;
wherein the first transmission direction is opposite to a second transmission direction of the time unit indicated by target information; or the first transmission direction is the same as the second transmission direction of the time unit indicated by the target information.

28. The terminal according to claim 25, wherein the time domain configuration information is used to indicate that the time unit is configured with an uplink subband or to indicate that the time unit is configured with a downlink subband;
wherein when the target information indicates that the transmission direction of the time unit is uplink, the time domain configuration information indicates that the time unit is configured with a downlink subband;
when the target information indicates that the transmission direction of the time unit is downlink, the time domain configuration information indicates that the time unit is configured with an uplink subband.

29. The terminal according to claim 25, wherein the time domain configuration information is indicated by at least one of the following:
a predefined value; or
a predefined symbol.

30. The terminal according to claim 29, wherein when the time domain configuration information is indicated by a predefined value, the processor is configured to read the computer program in the memory and perform at least one of the following operations:
when a value corresponding to a first time unit is a first value, determining a transmission direction of the first time unit according to the target information;
when the value corresponding to the first time unit is a second value, determining that the first time unit is configured with a first subband; or determining that the first time unit is configured with the first subband and the transmission direction of the first time unit is opposite to a transmission direction indicated by the target information; or determining the transmission configuration of the first time unit according to configuration information of subband full duplex;
wherein the first subband is an uplink subband or a downlink subband.

31. The terminal according to claim 30, wherein the processor is configured to read the computer program in the memory and perform at least one of the following operations:
when the configuration information of subband full duplex indicates that a transmission direction of the first time unit is uplink, determining that the transmission direction of the first time unit is uplink;
when the configuration information of subband full duplex indicates that the transmission direction of the first time unit is downlink, determining that the transmission direction of the first time unit is downlink;
when the configuration information of subband full duplex indicates that the first time unit is configured with a second subband, determining that the first time unit is configured with the second subband, wherein the second subband is an uplink subband or a downlink subband.

32. The terminal according to claim 29, wherein when the time domain configuration information is indicated by a predefined symbol, the processor is configured to read the computer program in the memory and perform at least one of the following operations:
when a predefined symbol corresponding to a second time unit indicates uplink, determining that a transmission direction of the second time unit is uplink;
when the predefined symbol corresponding to the second time unit indicates downlink, determining that the transmission direction of the second time unit is downlink;
when the predefined symbol corresponding to the second time unit indicates flexibility, determining that the transmission direction of the second time unit is a flexible direction;
when the predefined symbol corresponding to the second time unit is a first symbol, determining that the second time unit is configured with a third subband; or determining that the second time unit is configured with the third subband and the transmission direction of the second time unit is opposite to a transmission direction indicated by the target information; or determining the transmission configuration of the second time unit according to configuration information of subband full duplex;
wherein the first symbol is different from a symbol indicating uplink, a symbol indicating downlink, and a symbol indicating flexibility.

33. The terminal according to claim 32, wherein the processor is configured to read the computer program in the memory and perform at least one of the following operations:
wherein when the configuration information of subband full duplex indicates that a transmission direction of the second time unit is uplink, determining that the transmission direction of the second time unit is uplink;
when the configuration information of subband full duplex indicates that the transmission direction of the second time unit is downlink, determining that the transmission direction of the second time unit is downlink;
when the configuration information of subband full duplex indicates that the second time unit is configured with a fourth subband, determining that the second time unit is configured with the fourth subband, wherein the fourth subband is an uplink subband or a downlink subband.

34. The terminal according to claim 25, wherein the time domain configuration information indicates a transmission configuration of time units within one of the following time domain ranges:
all slots;
a time domain range indicated by Radio Resource Control (RRC);
a predefined time domain range;
a time domain range corresponding to a flexible subband.

35. The terminal according to claim 25, wherein the processor is configured to read the computer program in the memory and perform the following operations:
receiving valid time information of the time domain configuration information sent by the network-side device;
determining a transmission configuration of the time unit within the valid time according to the time domain configuration information.

36. The terminal according to claim 25, wherein the processor is configured to read the computer program in the memory and perform the following operations:
performing first processing when the terminal receives slot format indication (SFI)-related information configured by the network-side device through RRC signaling and fails to detect the time domain configuration information;
wherein the first processing comprises at least one of the following:
not performing data transmission and data reception within the valid time of the time domain configuration information;
determining a transmission direction of the time unit according to target information;
determining a transmission direction of the time unit according to first time domain configuration information, wherein the first time domain configuration information is previously received time domain configuration information before the current one;
setting a default transmission direction of the time unit within the valid time as a third transmission direction, wherein the third transmission direction is uplink transmission or downlink reception;
determining whether to perform data transmission or data reception according to indication information.

37. The terminal according to claim 36, wherein the processor is configured to read the computer program in the memory and perform at least one of the following operations:
when the indication information indicates a third value, stopping data reception in a third time unit, wherein the third time unit is a time unit for which downlink reception is indicated by the target information, or a time unit for which both the target information and the first time domain configuration information indicate downlink reception;
when the indication information indicates a fourth value, stopping data transmission in a fourth time unit, wherein the fourth time unit is a time unit for which uplink transmission is indicated by the target information, or a time unit for which both the target information and the first time domain configuration information indicate uplink transmission.

38. The terminal according to claim 27, 28, 36 or 37, wherein the target information comprises part or all of the following:
uplink and downlink common configuration information;
uplink and downlink dedicated configuration information;
SFI in DCI format 2-0.

39. A network-side device, comprising: a memory, a transceiver, and a processor; the memory being configured to store a computer program;
the transceiver being configured to receive and transmit data under the control of the processor;
the processor being configured to read the computer program in the memory and perform the following operations:
sending time domain configuration information to a terminal, wherein the time domain configuration information is used to indicate a transmission configuration of a time unit;
wherein the transmission configuration comprises at least one of the following:
the time unit is configured with an uplink subband;
the time unit is configured with a downlink subband;
a transmission direction of the time unit.

40. The network-side device according to claim 39, wherein the time domain configuration information is carried in predetermined DCI;
wherein the predetermined DCI comprises at least one of the following:
a dedicated DCI format corresponding to the time domain configuration information;
DCI format 2-0.

41. The network-side device according to claim 39, wherein the time domain configuration information is used to indicate that a transmission direction of the time unit is a first transmission direction;
wherein the first transmission direction is opposite to a second transmission direction of the time unit indicated by target information; or the first transmission direction is the same as the second transmission direction indicated by the target information.

42. The network-side device according to claim 39, wherein the time domain configuration information is used to indicate that the time unit is configured with an uplink subband or a downlink subband;
wherein when the target information indicates that the transmission direction of the time unit is uplink, the time domain configuration information indicates that the time unit is configured with a downlink subband;
when the target information indicates that the transmission direction of the time unit is downlink, the time domain configuration information indicates that the time unit is configured with an uplink subband.

43. The network-side device according to claim 39, wherein the time domain configuration information is indicated by at least one of the following:
a predefined value indication; or
a predefined symbol.

44. The network-side device according to claim 43, wherein when the time domain configuration information is indicated by a predefined value, the processor is configured to read the computer program in the memory and perform at least one of the following operations:
when a value corresponding to a first time unit is a first value, indicating that a transmission direction of the first time unit is determined based on the target information;
when a value corresponding to the first time unit is a second value, indicating that the first time unit is configured with a first subband; or indicating that the first time unit is configured with the first subband and its transmission direction is opposite to the direction indicated by the target information; or indicating that the transmission configuration of the first time unit is determined based on subband full duplex configuration information;
wherein the first subband is an uplink subband or a downlink subband.

45. The network-side device according to claim 43, wherein when the time domain configuration information of a time unit is indicated by a predefined symbol, the processor is configured to read the computer program in the memory and perform at least one of the following operations:
when the predefined symbol corresponding to a second time unit indicates uplink, indicating that the transmission direction of the second time unit is uplink;
when the predefined symbol corresponding to the second time unit indicates downlink, indicating that the transmission direction of the second time unit is downlink;
when the predefined symbol corresponding to the second time unit indicates flexibility, indicating that the transmission direction of the second time unit is a flexible direction;
when the predefined symbol corresponding to the second time unit is a first symbol, indicating that the second time unit is configured with a third subband; or indicating that the second time unit is configured with the third subband and its transmission direction is opposite to the direction indicated by the target information; or indicating that the transmission configuration of the second time unit is determined based on subband full duplex configuration information;
wherein the first symbol is different from a symbol indicating uplink, a symbol indicating downlink, and a symbol indicating flexibility.

46. The network-side device according to claim 39, wherein the time domain configuration information indicates a transmission configuration value of a time unit within one of the following time domain ranges:
all slots;
a time domain range indicated by RRC;
a predefined time domain range;
a time domain range corresponding to a flexible subband.

47. The network-side device according to claim 39, wherein the processor is configured to read the computer program in the memory and perform the following operation:
sending valid time information of the time domain configuration information to the terminal.

48. The network-side device according to claim 41, 42, 44 or 45, wherein the target information comprises part or all of the following:
uplink and downlink common configuration information;
uplink and downlink dedicated configuration information;
SFI in DCI format 2-0.

49. A time domain configuration information indication apparatus, comprising:
a detection unit, configured to detect time domain configuration information sent by a network-side device;
a determination unit, configured to determine a transmission configuration of a time unit according to the time domain configuration information in a case where the time domain configuration information is detected;
wherein the transmission configuration comprises at least one of the following:
the time unit is configured with an uplink subband;
the time unit is configured with a downlink subband;
a transmission direction of the time unit.

50. The apparatus according to claim 49, wherein the time domain configuration information is carried in predetermined downlink control information (DCI);
wherein the predetermined DCI comprises at least one of the following:
a dedicated DCI format corresponding to the time domain configuration information;
DCI format 2-0.

51. The apparatus according to claim 49, wherein the time domain configuration information is used to indicate that a transmission direction of the time unit is a first transmission direction;
wherein the first transmission direction is opposite to a second transmission direction of the time unit indicated by target information; or the first transmission direction is the same as the second transmission direction indicated by the target information.

52. The apparatus according to claim 49, wherein the time domain configuration information is used to indicate that the time unit is configured with an uplink subband or a downlink subband;
wherein when the target information indicates that the transmission direction of the time unit is uplink, the time domain configuration information indicates that the time unit is configured with a downlink subband;
when the target information indicates that the transmission direction of the time unit is downlink, the time domain configuration information indicates that the time unit is configured with an uplink subband.

53. The apparatus according to claim 49, wherein the time domain configuration information is indicated by at least one of the following:
a predefined value; or
a predefined symbol.

54. The apparatus according to claim 53, wherein when the time domain configuration information is indicated by a predefined value, the determination unit is specifically configured to perform at least one of the following:
when a value corresponding to a first time unit is a first value, determining that a transmission direction of the first time unit is determined based on the target information;
when a value corresponding to the first time unit is a second value, determining that the first time unit is configured with a first subband; or determining that the first time unit is configured with the first subband and its transmission direction is opposite to the transmission direction indicated by the target information; or determining that the transmission configuration of the first time unit is determined based on subband full duplex configuration information;
wherein the first subband is an uplink subband or a downlink subband.

55. The apparatus according to claim 54, wherein the determination unit is specifically configured to perform at least one of the following:
when the subband full duplex configuration information indicates that the transmission direction of the first time unit is uplink, determining that the transmission direction of the first time unit is uplink;
when the subband full duplex configuration information indicates that the transmission direction of the first time unit is downlink, determining that the transmission direction of the first time unit is downlink;
when the subband full duplex configuration information indicates that the first time unit is configured with a second subband, determining that the first time unit is configured with the second subband, wherein the second subband is an uplink subband or a downlink subband.

56. The apparatus according to claim 53, wherein when the time domain configuration information is indicated by a predefined symbol, the determination unit is specifically configured to perform at least one of the following:
when the predefined symbol corresponding to a second time unit indicates uplink, determining that the transmission direction of the second time unit is uplink;
when the predefined symbol corresponding to the second time unit indicates downlink, determining that the transmission direction of the second time unit is downlink;
when the predefined symbol corresponding to the second time unit indicates flexibility, determining that the transmission direction of the second time unit is a flexible direction;
when the predefined symbol corresponding to the second time unit is a first symbol, determining that the second time unit is configured with a third subband; or determining that the second time unit is configured with the third subband and its transmission direction is opposite to the transmission direction indicated by the target information; or determining that the transmission configuration of the second time unit is determined based on subband full duplex configuration information;
wherein the first symbol is different from a symbol indicating uplink, a symbol indicating downlink, and a symbol indicating flexibility.

57. The apparatus according to claim 56, wherein the determination unit is specifically configured to perform at least one of the following:
wherein when the subband full duplex configuration information indicates that a transmission direction of a second time unit is uplink, determining that the transmission direction of the second time unit is uplink;
wherein when the subband full duplex configuration information indicates that the transmission direction of the second time unit is downlink, determining that the transmission direction of the second time unit is downlink;
wherein when the subband full duplex configuration information indicates that the second time unit is configured with a fourth subband, determining that the second time unit is configured with the fourth subband, wherein the fourth subband is an uplink subband or a downlink subband.

58. The apparatus according to claim 49, wherein the time domain configuration information indicates a transmission configuration of a time unit within one of the following time domain ranges:
all slots;
a time domain range indicated by RRC;
a predefined time domain range;
a time domain range corresponding to a flexible subband.

59. The apparatus according to claim 49, wherein the apparatus further comprises:
a first receiving unit, configured to receive valid time information of the time domain configuration information sent by the network-side device;
wherein the determination unit is specifically configured to determine the transmission configuration of the time unit within the valid time according to the time domain configuration information.

60. The apparatus according to claim 49, wherein the apparatus further comprises:
a processing unit, configured to perform a first processing when the terminal receives SFI-related information configured by the network-side device via RRC signaling and the time domain configuration information is not detected;
wherein the first processing comprises one of the following:
not performing data transmission and data reception within the valid time of the time domain configuration information;
determining a transmission direction of the time unit according to target information;
determining a transmission direction of the time unit according to first time domain configuration information, wherein the first time domain configuration information is a previous time domain configuration information received by the terminal before the time domain configuration information;
defaulting the transmission direction of the time unit within the valid time to be a third transmission direction, wherein the third transmission direction is uplink transmission or downlink reception;
determining whether to perform data transmission or data reception according to indication information.

61. The apparatus according to claim 60, wherein the processing unit is specifically configured to perform at least one of the following:
when the indication information indicates a third value, stopping data reception in a third time unit, wherein the third time unit is a time unit indicated as downlink reception by the target information, or the third time unit is a time unit indicated as downlink reception by both the target information and the first time domain configuration information;
when the indication information indicates a fourth value, stopping data transmission in a fourth time unit, wherein the fourth time unit is a time unit indicated as uplink transmission by the target information, or the fourth time unit is a time unit indicated as uplink transmission by both the target information and the first time domain configuration information.

62. The apparatus according to claim 51, 52, 60, or 61, wherein the target information comprises part or all of the following:
uplink and downlink common configuration information;
uplink and downlink dedicated configuration information;
SFI in DCI format 2-0.

63. An apparatus for indicating time domain configuration information, comprising:
a first transmission unit, configured to transmit time domain configuration information to a terminal, wherein the time domain configuration information is used to indicate transmission configuration of a time unit;
wherein the transmission configuration comprises at least one of the following:
the time unit is configured with an uplink subband;
the time unit is configured with a downlink subband;
a transmission direction of the time unit.

64. The apparatus according to claim 63, wherein the time domain configuration information is carried in a predefined DCI;
wherein the predefined DCI comprises at least one of the following:
a dedicated DCI format corresponding to the time domain configuration information;
DCI format 2-0.

65. The apparatus according to claim 63, wherein the time domain configuration information is used to indicate that a transmission direction of the time unit is a first transmission direction;
wherein the first transmission direction is opposite to a second transmission direction of the time unit indicated by target information; or the first transmission direction is the same as the second transmission direction indicated by the target information.

66. The apparatus according to claim 63, wherein the time domain configuration information is used to indicate that the time unit is configured with an uplink subband or a downlink subband;
wherein when the target information indicates that the transmission direction of the time unit is uplink, the time domain configuration information indicates that the time unit is configured with a downlink subband;
when the target information indicates that the transmission direction of the time unit is downlink, the time domain configuration information indicates that the time unit is configured with an uplink subband.

67. The apparatus according to claim 63, wherein the time domain configuration information is indicated by at least one of the following:
a predefined value indication; or
a predefined symbol.

68. The apparatus according to claim 67, wherein when the time domain configuration information is indicated by a predefined value, the time domain configuration information indicates the transmission configuration of the time unit in at least one of the following ways:
when a value corresponding to a first time unit is a first value, indicating that the transmission direction of the first time unit is determined according to target information;
when the value corresponding to the first time unit is a second value, indicating that the first time unit is configured with a first subband; or indicating that the first time unit is configured with the first subband and the transmission direction of the first time unit is opposite to the transmission direction indicated by the target information; or indicating that the transmission configuration of the first time unit is determined according to subband full duplex configuration information;
wherein the first subband is an uplink subband or a downlink subband.

69. The apparatus according to claim 67, wherein when the time domain configuration information is indicated by a predefined symbol, the transmission configuration of the time unit is indicated in at least one of the following ways:
when a predefined symbol corresponding to a second time unit indicates uplink, indicating that the transmission direction of the second time unit is uplink;
when the predefined symbol corresponding to the second time unit indicates downlink, indicating that the transmission direction of the second time unit is downlink;
when the predefined symbol corresponding to the second time unit indicates flexible, indicating that the transmission direction of the second time unit is a flexible direction;
when the predefined symbol corresponding to the second time unit is a first symbol, indicating that the second time unit is configured with a third subband; or indicating that the second time unit is configured with the third subband and the transmission direction of the second time unit is opposite to the transmission direction indicated by the target information; or indicating that the transmission configuration of the second time unit is determined according to subband full duplex configuration information;
wherein the first symbol is different from the symbol indicating uplink, the symbol indicating downlink, and the symbol indicating flexible.

70. The apparatus according to claim 63, wherein the time domain configuration information indicates a transmission configuration of a time unit within one of the following time domain ranges:
all slots;
a time domain range indicated by RRC;
a predefined time domain range;
a time domain range corresponding to a flexible subband.

71. The apparatus according to claim 63, further comprising:
a second transmission unit, configured to transmit valid time information of the time domain configuration information to the terminal.

72. The apparatus according to any one of claims 65, 66, 68, or 69, wherein the target information comprises at least part of the following information:
uplink and downlink common configuration information;
uplink and downlink dedicated configuration information;
SFI in DCI format 2-0.

73. A processor-readable storage medium, on which a computer program is stored, wherein the computer program, when executed by a processor, implements the steps of the time domain configuration information indication method according to any one of claims 1 to 14.

74. A processor-readable storage medium, on which a computer program is stored, wherein the computer program, when executed by a processor, implements the steps of the time domain configuration information indication method according to any one of claims 15 to 24.
